Europäisches Patentamt

European Patent Office

Office européen des brevets

(19)

(11) **EP 0 535 248 B1**

(12) **EUROPEAN PATENT SPECIFICATION**

(45) Date of publication and mention
of the grant of the patent:
**30.06.1999 Bulletin 1999/26**

(51) Int Cl.$^6$: **G01N 25/68**

(86) International application number:
**PCT/JP92/00492**

(21) Application number: **92908343.4**

(22) Date of filing: **17.04.1992**

(87) International publication number:
**WO 92/18854 (29.10.1992 Gazette 1992/27)**

(54) **METHOD OF MEASURING THE DEW POINT AND/OR FROST POINT OF A GAS HAVING LOW WATER CONTENT AND APPARATUS THEREFOR**

VERFAHREN UND APPARATUR ZUR MESSUNG DES TAUPUNKTES UND/ODER DES FROSTPUNKTES EINES GASES GERINGEN WASSERGEHALTS

PROCEDE POUR MESURER LE POINT DE ROSEE ET/OU LA TEMPERATURE DE GEL D'UN GAZ A FAIBLE TENEUR EN EAU ET APPAREIL PREVU A CET EFFET

(84) Designated Contracting States:
**CH DE FR GB IT LI**

(30) Priority: 18.04.1991  JP 8690591
18.04.1991  JP 8690691
30.11.1991  JP 35740591
01.12.1991  JP 35740691
01.12.1991  JP 35740791

(43) Date of publication of application:
**07.04.1993  Bulletin 1993/14**

(73) Proprietor: **OSAKA SANSO KOGYO LIMITED**
**Yodogawa-Ku Osaka 532 (JP)**

(72) Inventors:
• **NISHIZAWA, Junichi**
**Sendai-shi, Miyagi 980 (JP)**
• **KIJIMA, Takahiko**
**Takarazuka-shi, Hyogo 665 (JP)**
• **EZELL, Edward, F.**
**Warren NJ 07059 (US)**
• **MAKIHARA, Akira**
**Ichikawa-shi, Chiba 272 (JP)**

(74) Representative: **Cozens, Paul Dennis**
**Mathys & Squire**
**100 Grays Inn Road**
**London WC1X 8AL (GB)**

(56) References cited:
**EP-A- 0 294 906**          **EP-A- 0 345 215**
**EP-A- 0 409 546**          **US-A- 3 623 356**
**US-A- 4 629 333**

EP 0 535 248 B1

## Description

The present invention relates to a method of determining the frost point of a gas, to an apparatus for carrying out the method, and to an optical frost-point meter.

First and second aspects of the invention relate in particular to a method of determining the frost point of a gas containing a very small amount of water, comprising the steps of: contacting a mirror with the gas; irradiating the mirror with focused rays of light; reducing the temperature of the mirror thereby condensing frost on the mirror; detecting light reflected and/or scattered by the mirror and any frost thereon; measuring the temperature of the mirror; and determining the frost point from the temperature of the mirror when the detected light has a predetermined characteristic.

Such a method is known from patent documents US-A-5052818 and EP-A-0409546. In EP-A-0409546, the frost point is judged to be the measured temperature at which a sudden increase in the quantity of scattered light is detected.

It has now been found out that below -90°C, the amount of condensation on the mirror is so small that the detector sometimes fails to achieve the correct sensing of the point where condensation has commenced. Furthermore, even if condensation can be detected, with the known method the correlation between the sensed frost point and the correct frost point is uncertain. Moreover, if supercooling occurs, condensation will not occur at the true frost point.

The present invention has evolved from a realisation after extensive research that, if the gas is cooled and then heated, or heated and then cooled, around the frost point, the temperature at which the scattered or reflected light is at a maximum or minimum (depending on whether scattered or reflected light is being detected and depending upon whether heating or cooling is taking place) can be regarded as the true frost point.

The first aspect of the invention is characterised by: in the temperature-reducing step, reducing the temperature of the mirror gradually; subsequent to the temperature-reducing step, gradually increasing the temperature of the mirror to a point in the neighbourhood of the frost point but which is insufficient for the frost to sublime completely from the mirror; and determining a point when the detected scattered light has a maximum intensity, and/or the detected reflected light has a minimum intensity, during the temperature-increasing step, to obtain the frost point of the gas.

Preferably, the method of the first aspect of the invention further comprises the steps of: performing a second temperature-reducing step subsequent to the temperature-increasing step; and determining a second point when the detected scattered light has a minimum intensity, and/or the detected reflected light has a maximum intensity, during the second temperature-reducing step, to obtain the frost point of the gas.

A second aspect of the invention is characterised by: in the temperature-reducing step, reducing the temperature of the mirror gradually; subsequent to the temperature-reducing step, gradually increasing the temperature of the mirror to a point in the neighbourhood of the frost point but which is insufficient for the frost to sublime completely from the mirror; performing a second temperature-reducing step subsequent to the temperature-increasing step; and determining a point when the detected scattered light has a minimum intensity, and/or the detected reflected light has a maximum intensity, during the second temperature-reducing step, to obtain the frost point of the gas.

It is believed that these methods provide a most accurate way of measuring frost points and are practical enough to be implemented with an industrially useful frost-point meter.

In accordance with other aspects of the present invention, there are provided optical frost-point meters arranged to perform the above methods.

Specific embodiments of the present invention will now be described by way of example with reference to the accompanying drawings, in which:

Fig. 1 is a diagram showing the concept of a dew or frost point meter that makes use of the change in the intensity of scattered light and/or reflected light from a reflector mirror;

Fig. 2 is a graph showing the relationship between the temperature of the reflector mirror and the intensity of scattered light;

Fig. 3 is a graph showing the relationship between the temperature of the reflector mirror and the intensity of reflected light;

Fig. 4 is a graph showing, in association with Fig. 2, the relationship between the intensity of scattered light, the point of nucleus formation, the subliming point and the accumulation point of solidificaiton of the topmost layer;

Fig. 5 is a graph used (in the present invention) for determining a maximum point on a straight line constructed by differentiating the curve shown in Fig. 2 or 4;

Fig. 6 is a graph showing the cycle times of the point of nucleus formation and the subliming point as measured at low dew points (in the prior art);

Fig. 7 is a graph showing the cycle times of the subliming point and the accumulation point as measured at low dew points (in the present invention);

Fig. 8 is a graph showing the profile of tube cleanup;

Fig. 9 shows a system for measuring the tube cleanup speed;

Fig. 10 is a graph showing the profile of a tube cleanup experiment;

Fig. 11 is a graph showing the profile of another tube cleanup experiment;

Fig. 12 is a graph showing the relationship between the frost point of a standard gas and a measured point of equilibrium;

Fig. 13 is a graph showing the water content of a standard gas and a measured water content as calculated from measured point equilibrium;

Fig. 14 shows a flow schematic showing standard moisture generator used for measuring the relationships shown in Figs. 11 and 12;

Fig. 15 is a flowsheet for an apparatus according to a preferred embodiment of the present invention;

Fig. 16 is a flowsheet for an apparatus according to another preferred embodiment of the present invention;

Fig. 17 is a flowsheet for an apparatus according to still another preferred embodiment of the present invention;

Fig. 18 is a flowsheet for an apparatus according to yet another preferred embodiment of the present invention;

Fig. 19 is a flowsheet for an apparatus according to a still preferred embodiment of the present invention;

Fig. 20 is a flowsheet for an apparatus according to another preferred embodiment of the present invention;

Fig. 21 is an apparatus preferred for implementing the present invention;

Fig. 22 shows another apparatus preferred for implementing the present invention;

Fig. 23 shows yet another preferred apparatus for implementing the present invention;

Fig. 24 shows still another apparatus preferred for implementing the present invention;

Fig. 25 is a circuit diagram of a photodetector;

Fig. 26 is a flowsheet for an apparatus according to another preferred embodiment of the present invention; and

Fig. 27 is a graph plotting the values obtained by a continuous measurement on the flow of a standard gas.

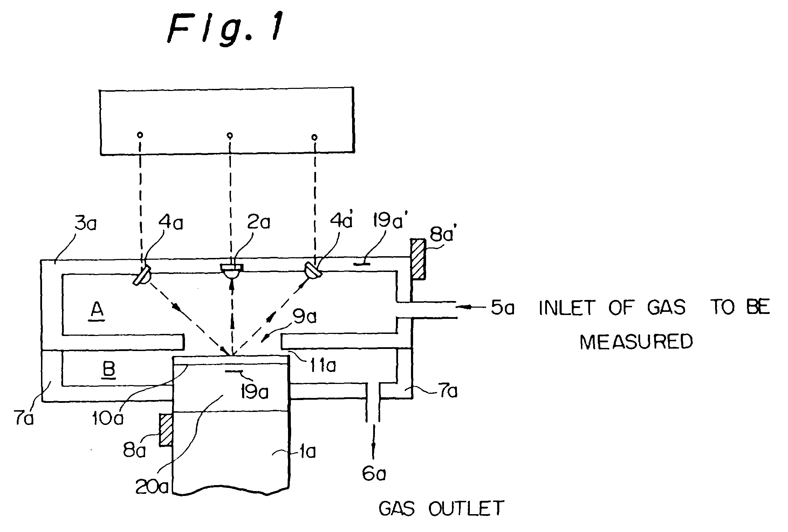

The operating principle of the method of the present invention is described below with reference to Fig. 1 which shows schematically the concept of an apparatus that is generally called a dew point or a frost point meter.

Shown by 1a is a freeze generator and 8a is a heater. Shown by 20a is a cold head. Compartment A is enclosed with walls 8a that are typically made of a good heat conductor such as gold, silver, copper, aluminum, silicon, nickel or chromium. Shown by 5a is an inlet for the gas to be measured. Compartment B is enclosed chiefly with walls 7a and partly with walls 3a. A hole 9a is made in the interface between the two compartments A and B. Shown by 11a is the gap between a reflector mirror 10a and the interface between the compartments A and B. At least part of the walls 7a of compartment B is formed of a poor heat conductor such as stainless steel, a copper-nickel alloy, glass, ceramics, or plastics (e.g. fluorine resins, polyimide resins and silicone resins). This is in order to prevent compartment A from being cooled by the cold head 20a. Shown by 6a is a gas outlet. Shown by 4a is a light source equipped with a condenser lens and may typically be an LED emitting at a given wave-length. Shown by 4a' is a photodetector equipped with a condenser lens, and the light emitted from 4a and reflected by the reflector mirror 10a is condensed as much as possible to be effectively detected by 4a'. Shown by 2a is a photodetector equipped with a condenser lens for detecting the light scattered by the reflector mirror 10a when the light emitted from 4a is reflected by that reflector mirror 10a.

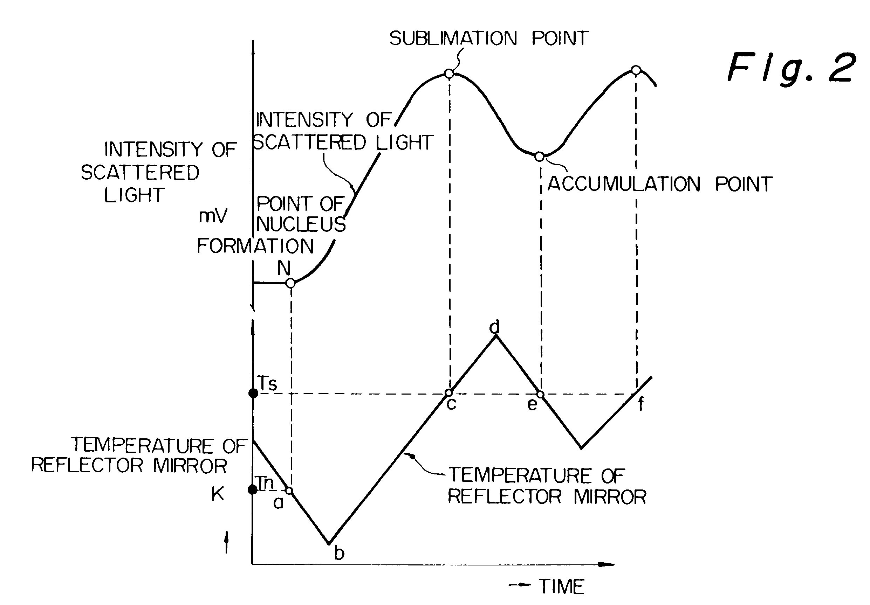

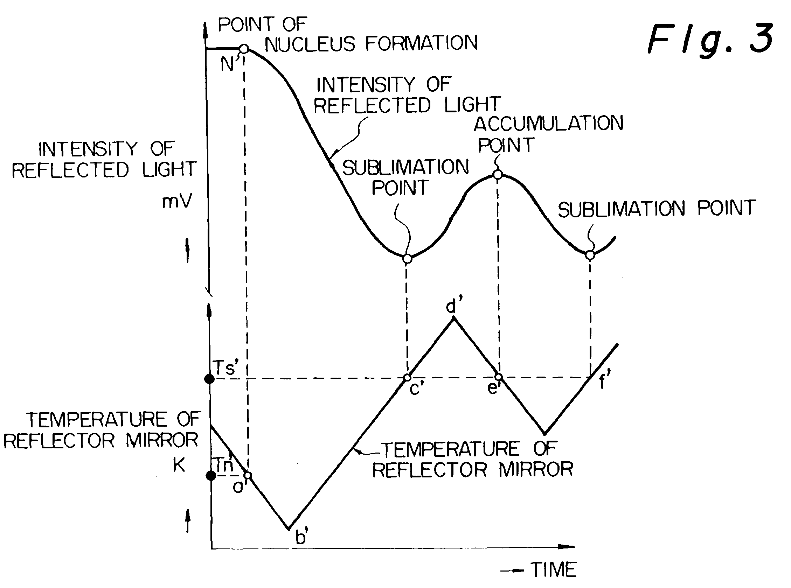

Dew point meters are generally classified as three types, one of the reflected light type which has the light source 4a and the reflected light detector 4a', another of the scattering type which has the lightsource 4a and the scattered light detector 2a, and the other of the type that detects both reflected and scattered light. Measuring the dew or frost point of a gas of interest using the apparatus described above will proceed in the following manner. First, the gas to be measured is introduced through the inlet 5a into compartment A which is controlled at a constant temperature by means of a heater 8' and a thermometer 19a'. The introduced gas contacts the reflector mirror 10a via the hole 9a, with dew or frost being condensed on that mirror 10a. The uncondensed gas flows through the gap 11a to be discharged from compartment B through outlet 6a. With the temperature being measured with a temperature sensor 19a inserted close to the reflector mirror 10a, the latter is cooled or heated by a specified method with the freeze generator la and the heater 8a. As the reflector mirror is cooled down, dew or frost is condensed on its surface, whereby the light from the light source 4a is scattered to increase the intensity of the light received by the photodetector 2a equipped with a condenser lens. The profile of the increase in the intensity of light scattering is shown in Fig. 2. Point N is where it can be assumed that the scattered light started to increase and the temperature of the reflector mirror at that point is indicated by Tn corresponding to point _a_. Similarly, the dew or frost condensed on the surface of the reflector mirror caused the light from the light source 4a to be scattered while decreasing the intensity of light being received by the photodetector 4a' equipped with a condenser lens. The profile of the decrease in the intensity of light reflection is shown in Fig. 3; point N' is where it can be assumed that the reflected light started to decrease and the temperature of the reflector mirror at that point is indicated by Tn' corresponding to point a'.

The operating principle behind this phenomenon is described below with reference to Fig. 2. When the temperature of the reflector mirror is lowered, dew or frost condensation occurs at point _a_. However, with the gas being supercooled, point a does not correspond to the correct dew or frost point. In order to make sure that dew or frost condensation has occurred, the temperature of the reflector mirror is further lowered down to point b and subsequently elevated. Needless to say, the gas in this state is supercooled and the ice will continue to grow. Point c where the intensity of scattered light is at a maximum may be designated the subliming point. The temperature of the reflector mirror at that point corresponds to Ts. The profile for the intensity of actual scattered light does not draw a simple parabolic curve it contains but many small ups and downs due to noise as are observed in a record of seismic waves. Hence, the computer will recognize a maximum point of scattered light only some time after the actual maximum point has been reached. In other words, the reflector mirror will be heated even after the actual maximum point (point c) for scattered light has been passed. It is at point d that the computer recognizes that the maximum point for scattered light has been reached and from point d onward, the reflector mirror is cooled again and the intensity of scattered light takes on a minimum value at point e, with the corresponding temperature of the reflector mirror being also Ts. As in the case of the maximum intensity, the background noise causes the computer to recognize the minimum point of scattered light only some time after the actual minimum point has been reached. In other words, the reflector mirror will be cooled even after the actual minimum point (point e) for scattered light has been passed. It is at point f that the computer recognizes that the minimum point for scattered light has been reached and from point f onward, the reflector mirror is heated again.

Thus, it has been verified that the subliming point where the amount of light reception takes on a maximum value and the next occurring of accumulation point of agree to each other with respect to a gas of the same water content; hence, one may safely conclude that Ts corresponds to the correct dew or frost point of the gas of interest. If the cycle of heating or cooling the reflector mirror is repeated, the curve for the scattered light will also change drawing a parabolic pattern. The subliming point and the accumulation point will occur cyclically.

The same principle is further described below with reference to Fig. 3. When the temperature of the reflector mirror is lowered, dew or frost condensation occurs at point a'. However, with the gas being supercooled, point a' does not correspond to the correct dew or frost point. In order to make sure that dew or frost condensation has occurred, the temperature of the reflector mirror is further lowered down to point b' and subsequently elevated. Needless to say, the gas in this state is supercooled and the ice will continue to grow. Point c' where the intensity of reflected light is at a minimum may be designated the subliming point. The temperature of the reflector mirror at that point corresponds to Ts'. Then, the reflector mirror is heated up to point d' which can be regarded as the subliming point, whereupon the ice starts to vaporize and the temperature of the reflector mirror starts to decrease at point d' downward and the intensity of reflected light will attain a maximum level at point e'. The temperature of the reflector mirror at that point also corresponds to Ts'. Thus, it has been verified that the subliming point where the amount of light reception takes on a minimum value and the next occurring point of accumulation agree to each other for a gas of the same water content; hence, one may safely conclude that Ts' corresponds to the correct dew or frost point of the gas of interest. If the cycle of heating or cooling the reflector mirror is repeated, the curve for the reflected light will also change drawing a parabolic pattern. As in the case of detecting scattered light, the subliming point and the accumulation point occur cyclically in the case of detecting reflected light.

Profiles for the cooling and heating rates in the case under consideration are given below.

Table 1

| Cooling Rate | | |
|---|---|---|
| Temperature | range(° C→° C) | Cooling rate(° C/min) |
| 20 | -70 | 10.0 |
| - 70 | - 90 | 4.0 |
| - 90 | -100 | 2.0 |
| -100 | -105 | 1.0 |
| -105 | -110 | 0.50 |
| -110 | -115 | 0.25 |
| -115 | -120 | 0.13 |
| -120 | -125 | 0.063 |
| -125 | -130 | 0.031 |
| -130 | -135 | 0.016 |

Table 2

| Heating Rate | | |
|---|---|---|
| Temperature | range($°\,C \rightarrow °\,C$) | Heating rate($°\,C/min$) |
| -135 | -130 | 0.016 |
| -130 | -125 | 0.031 |
| -125 | -120 | 0.063 |
| -120 | -115 | 0.13 |
| -115 | -110 | 0.25 |
| -110 | -105 | 0.50 |
| -105 | -100 | 1.0 |
| -100 | - 90 | 2.0 |
| - 90 | - 70 | 4.0 |
| - 70 | 30 | 10.0 |

Equation (1) is a formula for a curve. The lower the temperature, the slower the heating and cooling rates. In the case under consideration, the rate of cooling from 20° C to -70° C is 10.0° C/min whereas the rate of cooling from -130° C to -135° C is 0.016° C/min. If it is assumed that cooling or heating is conducted following the curved path represented by Equation (1), the heating or cooling rate must be slowed down at decreasing temperature and to achieve this, performing a fully coputer-aided control is ideal. However, this approach is not economical.

The common practice is to lower the cooling or heating rate stepwise as shown in Tables 1 and 2 above. For example, at temperatures below -100° C, the cooling or heating rate is varied for every decrement of 5° C.

Varying the heating or cooling rate stepwise following the curved path represented by Equation (1) means substantially the same as illustrated by Tables 1 and 2.

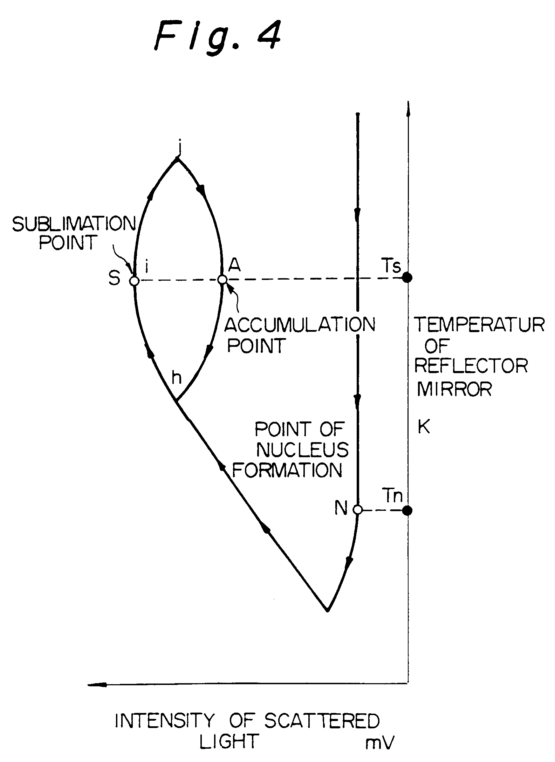

Fig. 4 is a graph showing the relationship between the temperature of the reflector mirror and the intensity of scattered light with respect to a similar method of measurement. Since the reflected light is the same as the scattered light except that the variation in intensity is reversed, the following description concerns only the scattered light and no description is made about the reflected light.

When the cycles of heating and cooling the reflector mirror are repeated, the intensity of scattered light changes drawing a parabolic curve to form a loop as shown in Fig. 4.

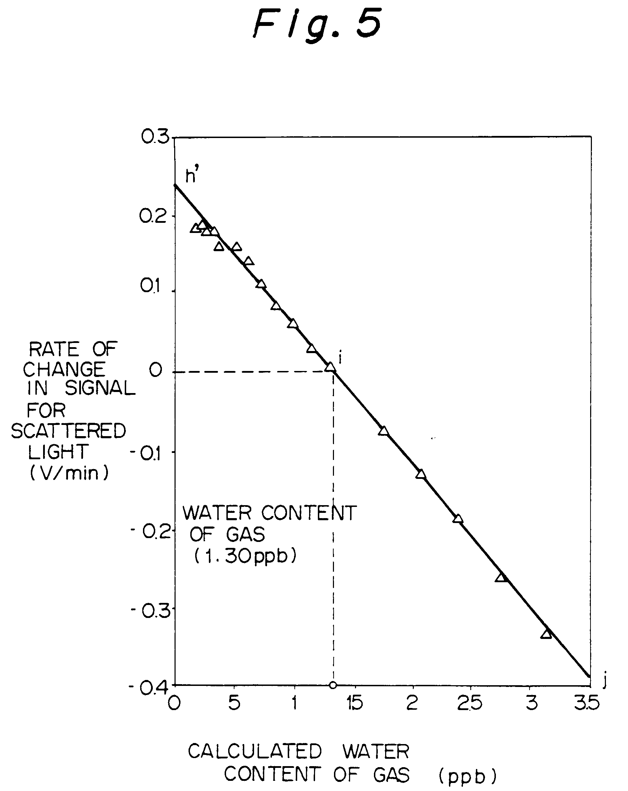

Fig. 5 is a graph showing the relationship between the water content of a particular gas and the rate of change in a signal for scattered light. Referring back to Fig. 4, the intensity of scattered light changes at points h, i and j drawing a curve when the temperature of the reflector mirror is varied. Assuming that the curve connecting points h, i and j represents a quadratic function, one may differentiate it and plot the result on a straight line, as shown in Fig. 5. In Fig. 5, points h', i' and j' correspond respectively to points h, i and j in Fig. 4. The water content of the gas as plotted on the horizontal axis represents the value as determined from the equation for the vapor pressure of ice.

One may safely conclude that the gas under consideration had a water content of 1.30 ppb. The conditions of the experiment were as follows:

$$T_0 = -90°\ C$$

$$R(T) = ca.4°\ C/min$$

$$n = ca.\ 0.67$$

$$\Delta T = ca.\ 0.4°\ C$$

Sample measured once for every two seconds.

Another characterizing part of the present invention is that it makes a special provision for the error resulting from noise that will unavoidably occur in measurements of the type contemplated by the present invention. If the peak intensity of scattered light is taken as the point of dew or frost condensation, noise makes it very difficult to read the correct point. However, if the point of dew or frost condensation is to be derived from the crest of a peak or the bottom of a valley as in the present invention, one may plot the actual points on the straight line obtained by differentiating a quadratic curve and determine the point of dew or frost condensation at the crest of a peak on the straight line obtained by the method of least squares. This insures the operator to obtain very precise and stable values even in the presence of noise.

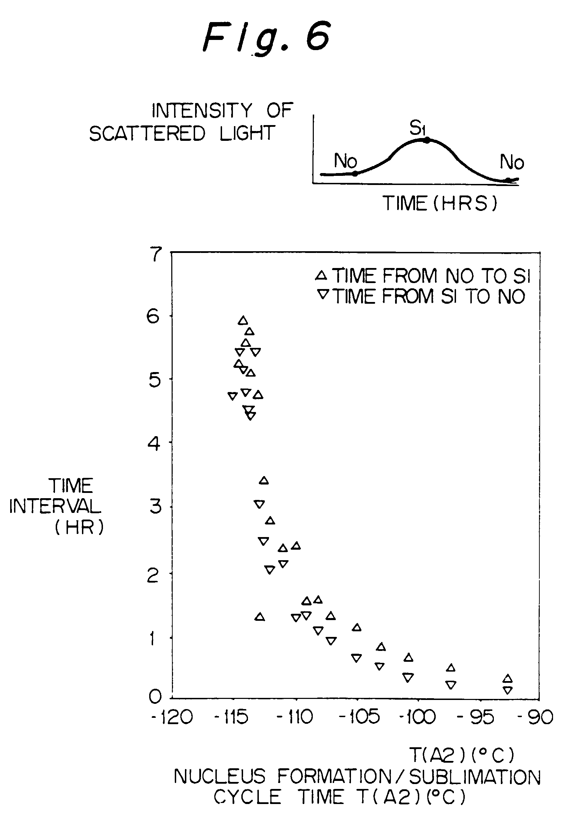

Fig. 6 shows the time from the point of dew or frost formation (No) to the point ($S_1$) where the intensity of scattered light reached a maximum, as well as the time from point $S_1$ to the point where the dew or frost disappeared in the prior art method. Obviously, the prior art method took quite a long time to complete measurements.

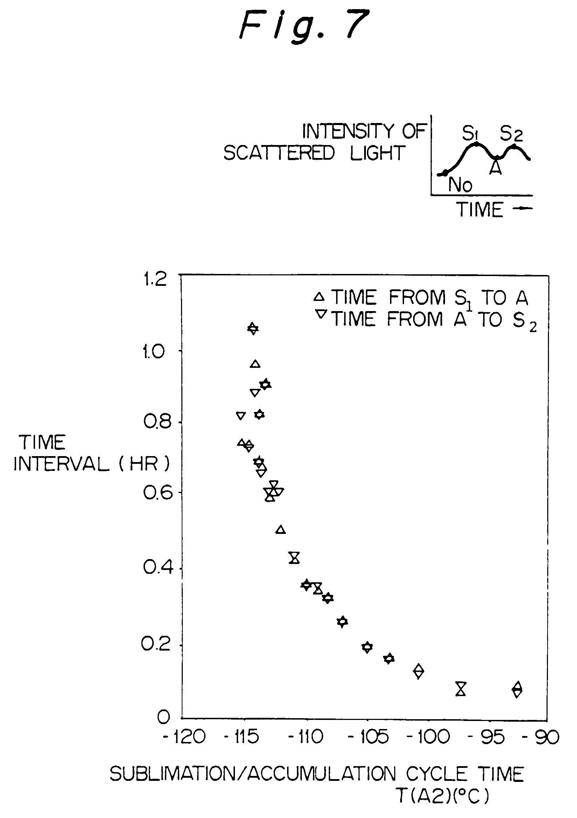

Fig. 7 shows the relationship between the accumulation point (A) and each of the two subliming points ($S_1$ and $S_2$) as detected by the method of the present invention. Obviously, the time of measurement was drastically shortened when the method of the present invention was adopted.

Applications of low-temperature optical dew point meter

Described below are several examples of measurement with a low-temperature optical dew point meter.

Tube cleanup

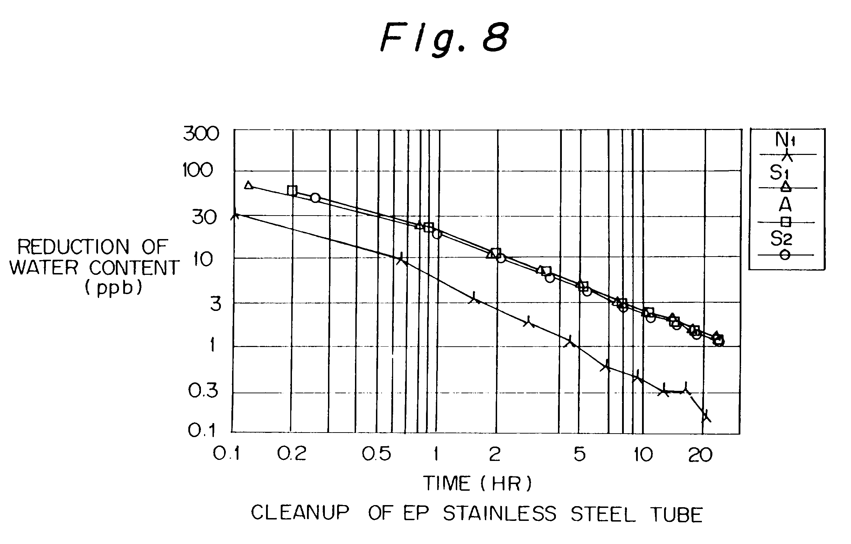

An EP tube of stainless steel (SUS 316L) that had a diameter of 1/4 inch and the inner surface of which was electropolished was left to stand in atmospheric air as $N_2$ gas purified with a zirconium getter purifier (SAES Getters S.p.A.) was allowed to flow through the tube and the phenomenon of tube cleanup was examined. The time profiles of the point of dew condensation (No) as measured by the prior art method, as well as the temperatures at the three points ($S_1$ A, $S_2$) for determining the points of equilibria are shown in Fig. 8. For convenience sake, the plots of both the points of equilibria and the point of dew condensation were computed from the equation for a curve of the vapor pressure of ice. According to Fig. 8, the points of equilibria decreased almost linearly irrespective of the differences in S , A and S , giving a good approximation for the phenomenon of water desorption from the inner surface of the tube. On the other hand, the point of dew condensation was lower and less stable than the points of equilibria. Effectiveness of passivation treatment with $O_2$

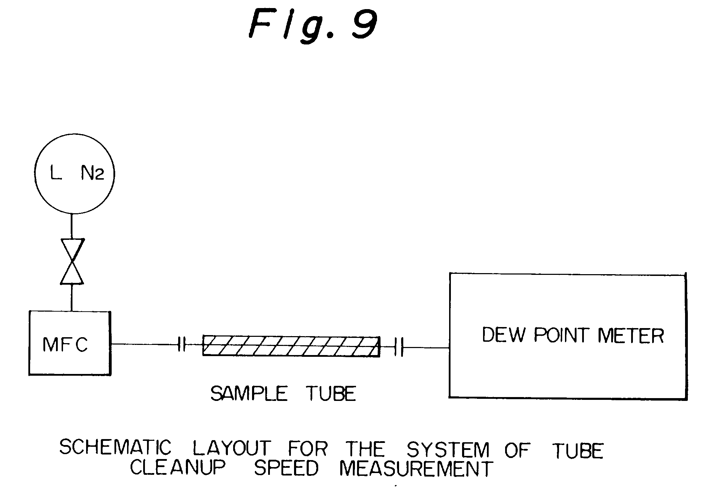

The above-mentioned electropolished (EP) tube of stainless steel (SUS 316L) was compared with an $O_2$ passivation treated tube that was the same as the EP tube except that it was heat treated with an oxygen gas of low dew point. The measurement system used is shown in Fig. 9. The purifying gas was a nitrogen gas of very low dew point that was prepared by vaporizing liquid nitrogen. With its flow rate being controlled with a MFC (mass flow controller), the $N_2$ was permitted to flow through the tube of interest and the cleanup speed was measured. Two tube sizes were selected: 3/8 inch and 1 inch o.d.

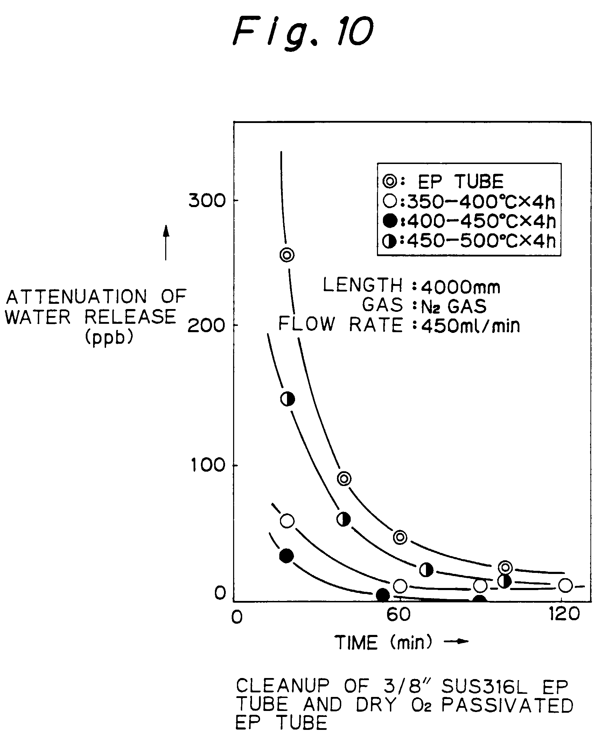

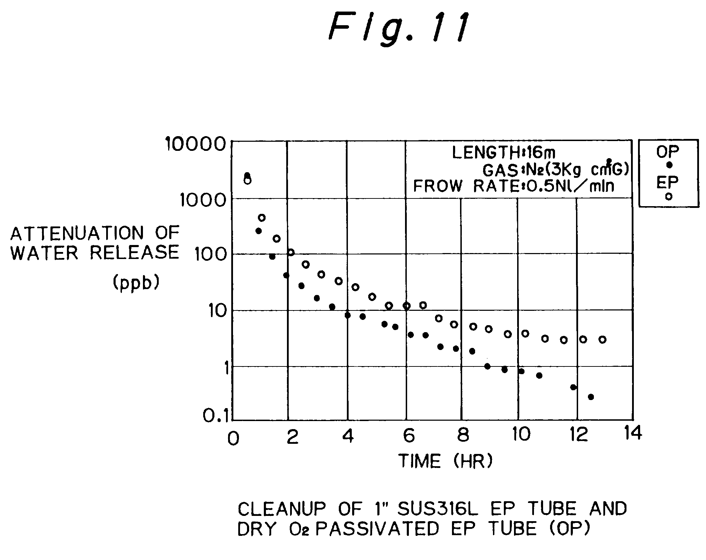

As for the tubes with the o.d. 3/8 inch, measurements were also conducted for varying temperatures of the passivation treatment with $O_2$. The results are shown in Fig. 10, from which one can see that the cleanup speed was the lowest with the unpassivated EP tube whereas it was the highest with the tubes passivated at 400° C - 450° C. One can also see from Fig. 10 that the behavior of water release from the inner surface of tube varied with the temperature for treatment and that, inversely, an optimum temperature for treatment can be determined from the behaviour of water release. Fig. 11 shows the results of cleanup on a SUS 316L EP tube (1 inch$\phi$) and a 16-m long EP tube that was subjected to passivation with $O_2$ of low dew point.

Relationship between dew point and water content

As is well known, the dew point can be converted to the water content and vice versa and, as a matter of fact, the water content is currently expressed in terms of such units as °C and ppm. Various methods of conversion are described below. A water content meter has such an operating principle that it measures the water content and converts it to a dew point. On the other hand, a dew point meter measures the dew point and converts it to a water content. To convert from one parameter to the other, the saturated vapor pressure of water is used and a calculation is made in terms of the ratio of partial pressure to total pressure. Since the saturated vapor pressure is a function of temperature, the ratio of partial pressure to total pressure at a given temperature will provide a simple means of determining the relationship between dew point and water content. Generally speaking, the dew point is determined from the point of phase transition at one atmosphere, namely, the point of dew (frost) condensation, and the total pressure is assumed to be one atmosphere. The method, however, has several problems, as described below.

(1) A number of experimental formulas have been reported to describe the curve for the saturated vapor pressure of water but they differ from one another by small degrees; and
(2) Since the saturated vapor pressure is used as a key parameter, conversion is possible only in the case where a complete equilibrium, or a saturated state, is to be measured.

Only after these points are taken into account, it is possible to perform a conversion from dew point to water content and vice versa. JIS K 0512 ("Hydrogen") lists a table of conversion between dew point and water content down to -100° C but it is of no help at temperatures below -100° C. The only alternative for conversion is to use a line of extrapolation from the curve for the saturated vapor pressure of water as constructed in the manner described above. The formula that is known to be the most reliable today is:

$$\log_{10} P_{H_2O} = -2445.5646/T + 8.2312 \log^{10} T -$$

$$0.01677006T + 1.20514 \times 10^{-5} T^2 - 6.757169$$

$$C = P_{H_2O}/760 \cdot 10^9$$

where

T : dew point on the absolute scale (K)
$P_{H_2O}$ : the saturated vapor pressure of water (mmHg)
C : water content (ppb)

This formula is given in International Critical Tables of Numerical Data, Physics, Chemistry and Tehcnology, Volume III, p.210, National Research Council of USA (1928).

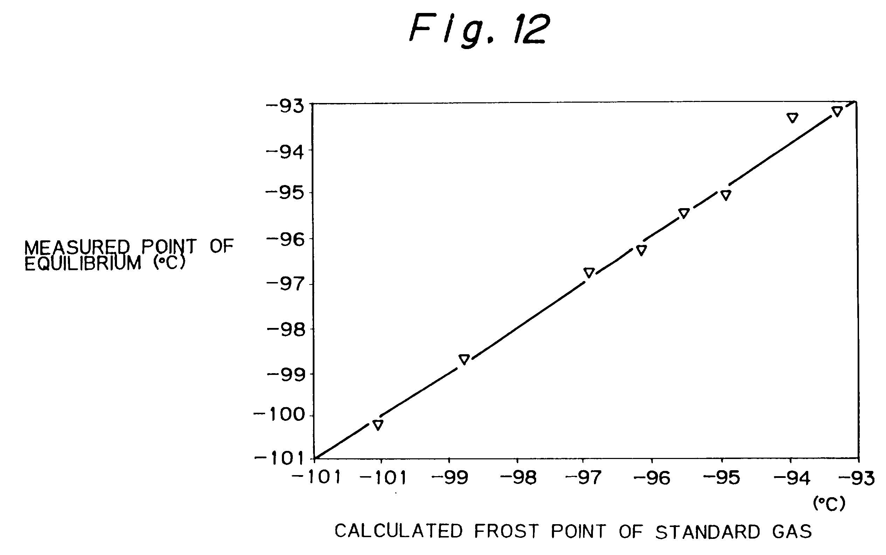

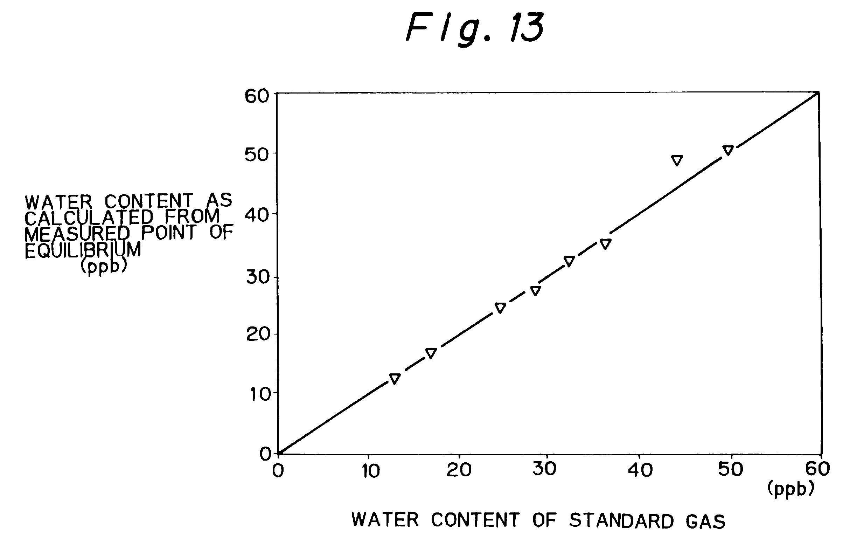

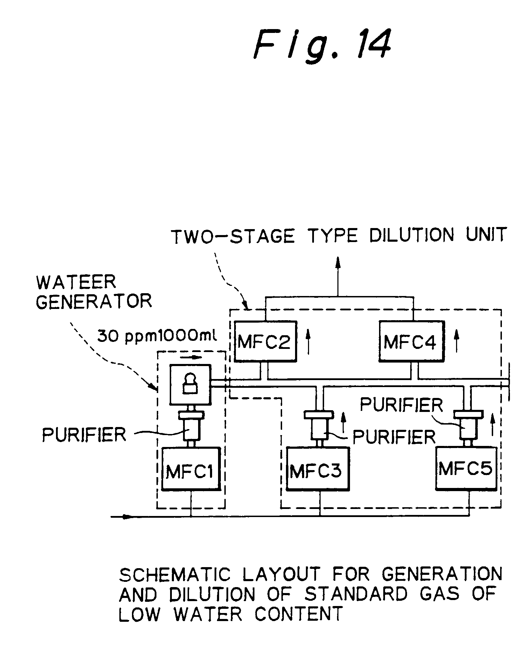

Fig. 12 shows the relationship between the frost point of a standard gas (with a known water content) as calculated from the water content and the point of equilibrium (°C) as measured in accordance with the present invention. Fig. 13 shows the relationship between the water content of a standard gas and the water content as calculated from the actually measured point of equilibrium. It is obvious from Figs. 12 and 13 that the method of the present invention enables the water content of a gas to be measured in a very precise way. The apparatus used in the experiment for generating the standard gas was a model from Hitachi Tokyo Electronics Co., Ltd. (see Fig. 14), in which 30 ppm of a standard gas was diluted through two stages to generate the desired standard gas.

This invention also relates to an apparatus for carrying out the method of any one of claims 1 - 8, said apparatus comprising:

(i) compartment A made of a good heat conductor;
(ii) an inlet for the gas to be measured, which inlet is provided on compartment A;
(iii) a heater for adjusting the temperature in compartment A, and a temperature sensor;
(iv) compartment B provided adjacent to compartment A, at least part of compartment B being made of a poor heat conductor;
(v) a hole or nozzle provided at the interface between compartments A and B;
(vi) a reflector mirror having a temperature sensor, said reflector mirror being provided on compartment B in such a way as to cover the hole or nozzle, and said mirror being connected thermally to a freeze source in such a way that it can be freely varied in temperature from room temperature to -80°C or below;
(vii) a gas outlet provided on compartment B;
(viii)a small gap formed between said hole or nozzle and said reflector mirror;
(ix) a device that allows convergent rays of light or laser light to be emitted onto the surface of the reflector mirror;
(x) a light-receiving device that projects condensed rays of light or laser light onto the frost formed on the surface of the reflector mirror, thereby detecting the change in the intensity of scattered light and/or reflected light; and
(xi) a detector device that senses the temperature at which the condensation of dew and/or frost occurred on the reflector mirror.

This invention also relates to an apparatus for carrying out the method of any one of claims 1 - 8, said apparatus comprises:

(i) a reflector mirror whose temperature can be changed from room temperature to a point less than -80°C;
(ii) a gas inlet or a gas blowing nozzle for supplying a sample gas into a compartment including said reflector mirror in such a way that said sample gas will contact said reflector mirror;
(iii) a source of condensed light or laser light;

(iv) a device for projecting condensed rays of light to that part of the relector mirror where dew or frost is to form;

(v) a mechanism for detecting the change in the intensity of scattered light due to the dew or frost formed on the reflector mirror; and

(vi) a mechanism for detecting the temperature at which the change in the intensity of scattered light was detected, the improvement wherein said scattered light is detected with a light-receiving device provided in two or more directions.

The present invention is described below from a mechanistic viewpoint with reference to accompanying drawings. The dew point meter shown in those drawings is merely intended for illustrative purposes and will in no way limit the scope of the present invention.

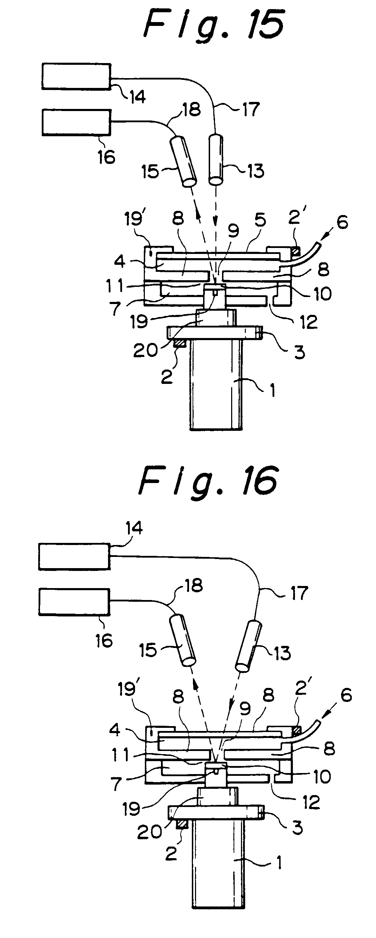

Fig. 15 shows an embodiment of the present invention. Shown by 1 is a freeze generator; 2 and 2' are each a heater; 3 is a cold head; 4 is compartment A which is made of a good heat conductor such as gold, silver, copper, aluminum, silicon, nickel or chromium; 5 is a window made of a light-transmissive material such as glass; 6 is an inlet for supplying a sample gas to be measured; 7 is compartment B, with a hole 9 being formed in the wall 8 at the interface between commpartment A 4 and compartment B 7; 10 is a reflector mirror positioned on top of a heat conductor 20 in such a way as to cover the hole 9. The heat conductor 20 is made of a material that conducts heat as well as the material of which compartment A 4 is made. Shown by 11 is the gap between the reflector mirror 10 and the interfacial wall 8. The gap 11 is preferably as small as possible but if it is designed to be extremely small, the slightest manufacturing error can potentially cause the reflector mirror 10 to contact the interfacial wall 8. To avoid this possibiility, the gap 11 preferably has a size of 0.1 - 2.0 mm. At least part of compartment B is made of stainless steel, a Cu-Ni alloy, glass, ceramics or plastics (e.g., a fluorine resin, a polyimide resin, a silicone resin). This is in order to insure that compartment A will not be chilled by the cold head 3. If compartment A is chilled excessively, moisture will be adsorbed on the inner surface of that compartment and a low water content may sometimes be read since not all of the moisture content is condensed on the mirror surface. If only one compartment exists, the cell will be cooled in entirety and depending on the selection of material in the cell, it may occur that part of the cell becomes colder than the mirror surface and subsequent moisture condensation in that part will lead to occasional failures to provide highly reproducible results of measurements.

Shown by 12 is a gas outlet; 13 is a condenser lens; 14 is a light source which may be a light-emitting diode; 15 is a condenser lens; 16 is a photodetector; 17 and 18 are each an optical fiber; and 19 and 19' are each a thermocouple or a resistance thermometer and they are inserted to measure the temperatures of the reflector mirror and compartment A.

A measurement of the water content of a gas with the apparatus shown in Fig. 15 will proceed as follows. First, the gas to be measured is supplied through the inlet 6 into compartment A 4 which is controlled at a given temperature by means of heater 2' and temperature sensor 19'; the gas flows through the hole 9 to make contact with the reflector mirror 10, thereby forming dew or frost on it; the uncondensed gas passes through the gap 11 to be discharged from compartment B through the outlet 12; the gap 11 is small enough to insure that the gas flowing from compartment A to compartment B through the hole 9 will not fail to contact the reflector mirror 10; the light from the light source 14 is converted by the condenser lens 13 in such a way as to form a beam spot that is focused as much as possible on the surface of the reflector mirror 10. The change in the intensity of scattered light due to dew or frost condensation is measured with the combination of the condenser lens 15 and the detector 16, thereby determining the dew point or frost point of the sample gas. The temperature occurring in that case is measured with the temperature sensor 19. The rate of cooling or heating the reflector mirror 10 can be controlled in any desired way by the combination of the heater 2 and the temperature sensor 19.

A helium refrigerator (not shown) may typically be used in the freeze generator but other freezing media such as liquefied nitrogen may also be used.

Fig. 15 illustrates an embodiment in which the change in the intensity of scattered light is measured with the condenser lens 15 and the detector 16. Shown in Fig. 16 is an embodiment in which a lens 13 is positioned in such a way that illuminating light is projected at an angle above the reflector mirror 10 and the condenser lens 15 is positioned on the optical axis of the reflected light. Thus, the present invention is applicable to the measurement of the changes in the intensity of both types of light, scatterd light and reflected light.

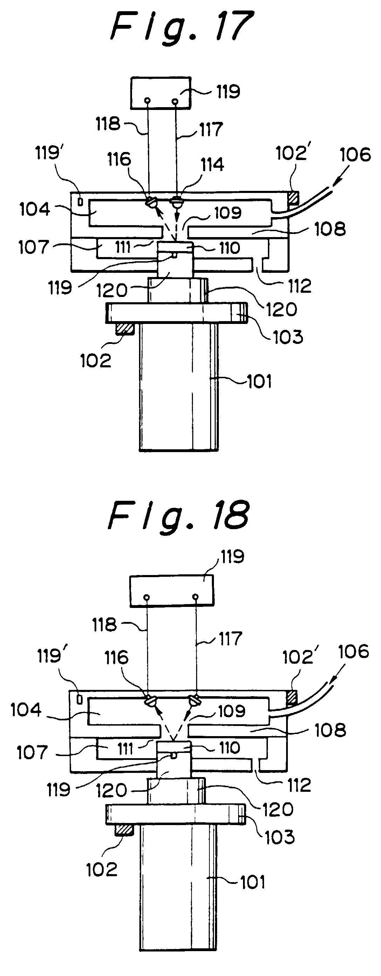

Fig. 17 shows another embodiment of the present invention. Shown by 101 is a freeze generator; 102 and 102' are each a heater; 103 is a cold head; 104 is compartment A which, as in the embodiment shown in Fig. 15, is made of a good heat conductor. Shown by 106 is an inlet for supplying a gas to be measured, and 107 is compartment B, with a hole 109 being formed in the wall 108 at the interface between compartment A 104 and compartment B 107; 110 is a reflector mirror positioned on top of a heat conductor 120 in such a way as to cover the hole 109. Shown by 111 is the gap between the reflector mirror 110 and the interfacial wall 108. For the size of the gap 111 and the constituent material of compartment B, see the remarks given in connection with the embodiment shown in Fig. 15. Shown by 112 is a gas outlet, and 119 and 119' are each a thermocouple or a resistance thermometer and they are adapted to function independently of each other to measure the temperatures of the reflector mirror and compartment A. Thus, as in the embodiment shown in Fig. 15, the primary object of the temperature sensor 119 is to measure the frost point but it can also be used for the purpsoe of controlling the operation of the helium refrigerator and the heater 102 so that the temperature at the surface of the reflector mirror 110 can be freely varied. The purpose of the temperature sensor 119' is to control the temperature in compartment A at will as the heater 102' is operating. The only differences from the embodiment shown in Fig. 15 are as follows: compartment A has no light-transmitting window; the light source 114 such as a light-emitting diode equipped with a condenser that is provided in compartment A and the detector 116 equipped with a condenser lens for receiving scattered light will project light onto the dew or frost formed on the reflector mirror and receive the resulting scattered light; and electric wires 118 and 117 and an electric circuit 119 for signal transmission and reception are provided outside the cell of the dew point meter. Fig. 18 shows the case where the change in the intensity of light from the light source 114 which has been reflected by the reflector mirror 110 is detected with the detector equipped with a condenser lens.

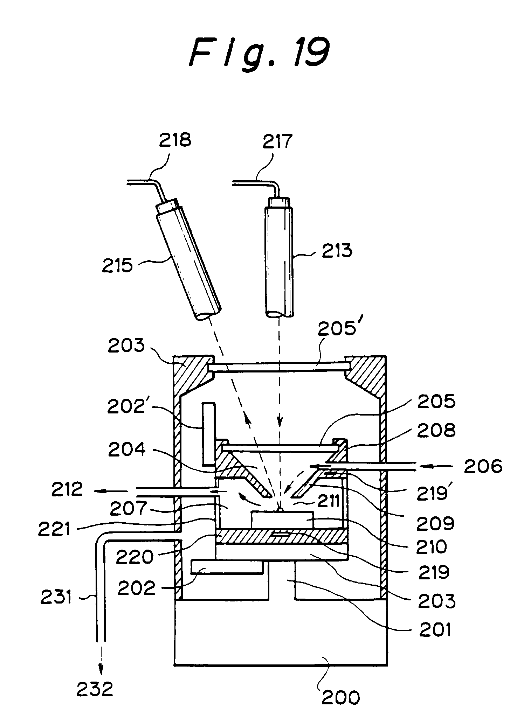

Fig. 19 shows still another embodiment of the present invention. Shown by 201 is a freeze generator; 200 is a helium refrigerator; 202 and 202' are each a heater; 203 is a cold head; 204 is compartment A; 206 is an inlet for supplying a gas to be measured; 207 is compartment B. Instead of a hole, a nozzle with a mild slope is provided at the interface between compartment A 204 and compartment B 207. A reflector mirror 210 is provided on top of a heat conductor 220 in such a way as to cover the nozzle 209. Shown by 211 is the gap between nozzle 209 and reflector mirror 210. As in the case shown in Fig. 15, the wall 208 of compartment A is made of a good heat conductor and the wall of compartment B in part 221 is made of a poor heat conductor. Shown by 212 is a gas outlet; 219 and 219' are each a thermocouple or a resistance thermometer; 202 and 202' are each a heater; 230 is a casing. The air in the casing 230 is discharged through a pipe 231 by means of a vacuum pump (not shown) in order to create a vacuum and thermally insulated condition. Shown by 205 and 205' are each a glass window capable of highly efficient light transmission. Light issuing from a light source such as a light-emitting diode is guided through an optical fiber 217, condensed by a condenser lens 213, projected onto a reflector mirror 211 and scattered by its surface. The scattered light passes through a condenser lens 215 and is guided thorugh an optical fiber 218 to be transmitted to a photodetector (not shown).

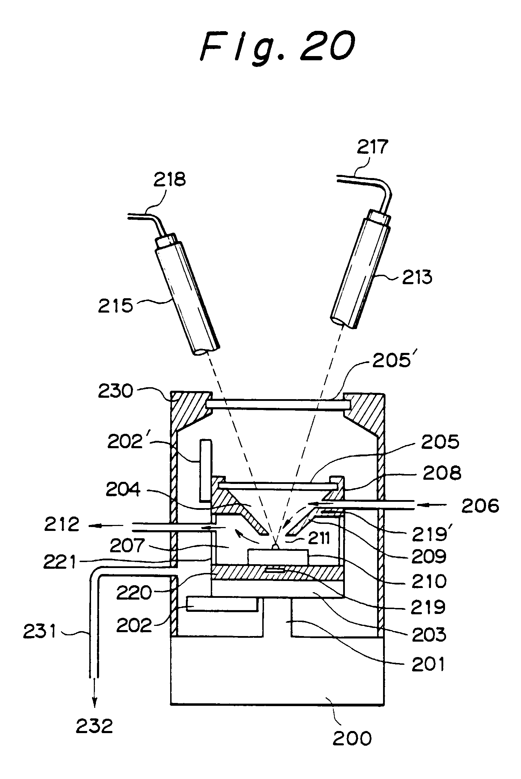

The only difference from the first embodiment shown in Figs. 15 and 16 is that a nozzle is provided between compartments A and B. The other features and their operations are completely the same and will not be described in detail. Fig. 20 shows an embodiment in which the light condensed by a condenser lens 213, projected onto a reflector mirror 211 and reflected from its surface passes through a condenser lens 215 provided on the optical axis of the reflected light and is subsequently guided through an optical fiber 218, whereupon the change in the intensity of received light is detected.

In the apparatus described above, compartment A preferably has an inner capacity of 0.5 - 5 ml. Compartment A may have any shape as seen in plan view.

In the figures mentioned above, compartment A is shown to be positioned above compartment B. Inversely, compartment B may be positioned above compartment A. If desired, both compartments A and B may be juxtaposed on a horizontal plane.

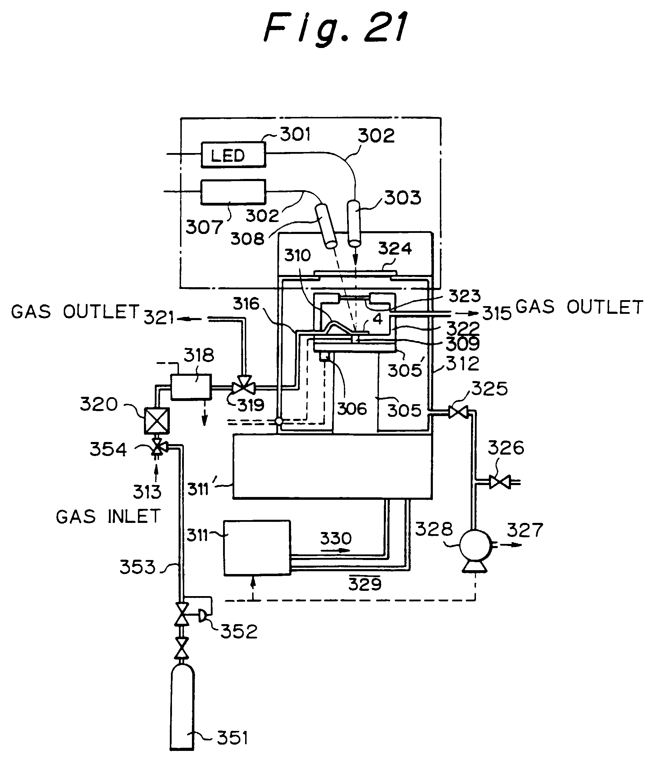

Fig. 21 illustrates a further apparatus. A helium refrigerator is used in the cooling system and a helium gas as compressed with a circulating helium compressor 311 is circulated through a loop consisting of a line 330, a drive mechanism 311', a freeze generator 305, the drive mechanism 311' and a line 329. The freeze generator 305 comprises a piston or displacer inserted into a stainless steel cylinder and by driving the piston or displacer vertically by means of the drive mechanism 311', freeze is genrated on the cold head 305' at the upper end of the cylinder 305. A metalic cell (hereunder referred to simply as the "cell") 322 is disposed in such a way as to insure adequate thermal contact with the cold head 305. The cell 322 is partly formed of a light-transmissive material 323 such as glass. A reflector mirror 304 in the form of a smooth-surfaced silicon wafer is placed on the bottom of the cell 322 in such a way as to insure adequate thermal contact. A temperature sensor 309 such as a thermocouple or a resistance thermometer is inserted into the bottom wall of the cell 322.

A sample gas to be measured for dew point is fed into the apparatus through a gas inlet 313, passes through a filter 320, has its flow rate adjusted to be constant by means of an automatic flow adjusting device 318 such as a mass flow controller, and is controlled in flow direction by a three-way valve 319 to be discharged from the system through a gas outlet 321. The sample gas line will reach an equilibrium faster when the volume of gas purge is high than when it is low. The sample gas then flows into the cell 322 via a line 316. The part of the line that penetrates the cell wall and the subsequent portion is made of a thin-walled stainless steel tube and, in the cell 322, the gas is blown against the reflector mirror 304 on the bottom of the cell, from which the gas is discharged through a gas outlet 315. To increase the response speed, the gas line starting from inlet 310 and extending up to part 310 is desirably composed of a tube of a suitable material such as stainless steel that has a diameter of 1/4", 1/8", 1/16", etc., that has been electropolished or otherwise treated to provide a smooth inner surface, and that is subjected to less adsorption or desorption of water and water release from the interior.

The light from a light-emitting diode (LED) 301 is guided through an optical fiber 302 to become partly convergent and is further focused to form a beam spot that passes through windows 324 and 323 made of a light-transmisive material to be incident normally on the surface of the reflector mirror 304. To determine the point of frost condensation on the surface of the reflector mirror, the light scattered from it is collected by a condenser lens 8 positioned in a direction exterior to the angle of reflection of the light projected from the lens 303, and the collected light is guided through an opticall fiber 302' and detected with a PN photodiode 307; the point of frost condensation is finally evaluated on the basis of the relationship between the intensity of scattered light and the temperature of the reflected mirror.

The cold portions such as the cell 322, the freeze generator 305 and the cold head 305' of the helium refrigerator must be thermally isolated from the ambient air; thus, they are isolated from the ambient air by being enclosed with an airtight chamber 312 that includes the window 324 (made of a light-transmissive material such as glass) and an electrical wiring connector 307, and the chamber 312 is thermally insulated by being evacuated by means of a vacuum system including vacuum valves 325 and 326 and a vacuum pump 328. If the apparatus described above is used to perform a continuous measurement of the points of equilibria, i.e., the subliming point and the point of solidification of the topmost layer, a sensitivity drop will occur on account of the contamination of the mirror surface. This phenomenon is detectable as a change in the slope of the straight line shown in Fig. 5. In such a case, the contamination of the mirror surface may be reduced by merely heating the chamber to a temperature higher than that of the mirror surface by at least 40 - 50° C. The system shown in Fig. 14 is adapted to be capable of a more advantageous approach, i.e., automatic cleaning of the cell with $CO_2$. Shown by 351 is a cylinder filled with liquefied $CO_2$ that has been especially purified to at least 99.999%; 352 is a pressure regulating valve; 353 is a pipe; and 354 is a valve. The $CO_2$ supply mechanism may be connected to the line for supplying the sample gas to be measured; alternatively, it may be a separate mechanism capable of blowing $CO_2$ against the reflector mirror.

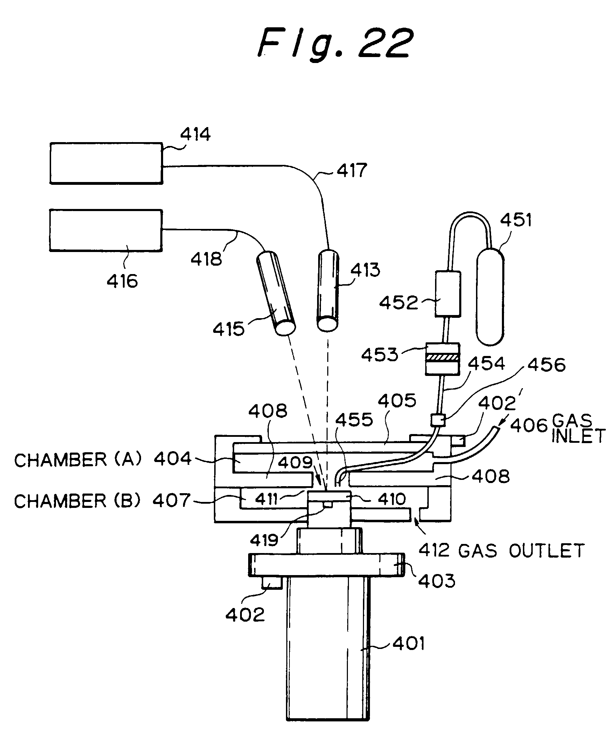

Another embodiment of the present invention is shown in Fig. 22. Shown by 401 is a freeze generator; 402 is a heater; 403 is a cold head; 404 is compartment A which is made of a good heat conductor such as gold, silver, copper, aluminum, silicon, nickel or chromium; 405 is a window made of a light-transmissive material such as glass; 406 is an inlet for supplying a sample gas to be measured; 407 is compartment B, with a hole 409 being formed in the wall 108 at the interface between compartment A 404 and compartment B 107; 410 is a reflector mirror positioned to cover the hole 409; and 411 is the gap between the reflector mirror 410 and the interfacial wall 408. The gap 411 is preferably as small as possible but if it is designed to be extremely small, the slightest manufacturing error can potentially cause the reflector mirror 410 to contact the interfacial wall 408. To avoid this possibility, the gap 411 preferably has a size of 0.1 - 2.0 mm. At least part of compartment B is made of stainless steel, a Cu-Ni alloy, glass, ceramics or plastics (e.g., a fluorine resin, a polyimide resin and a silicone resin). This is in order to insure that compartment A will not be chilled by the cold head 413. Shown by 412 in Fig. 22 is a gas outlet; 414 is a light source; 413 is a condenser lens; the light source 414 may be an LED emitting at a given wavelength; 415 is a condenser lens; 416 is a photodetector; and 417 and 418 are each an optical fiber.

A measurement of the water content of a gas with the apparatus shown in Fig. 22 will proceed as follows. First, the gas to be measured is supplied through the inlet 406 into compartment A 404 which is controlled at a given temperature by means of heater 402'; the gas flows through the hole 409 to make contact with the reflector mirror 410, thereby forming dew or frost on it; the uncondensed gas passes through the gap 411 to be discharged from compartment B through the outlet 412; the gap 411 is small enough to insure that the gas flowing from compartmen A to compartment B through the hole 409 will not fail to contact the reflector mirror 410; the light from the light source 414 is converged by the condenser lens 413 in such a way as to form a beam spot that is focused at the dew or frost layer formed on the reflector mirror 410, and the dew point and/or frost point is determined by the method already described hereinabove.

Shown by 451 in Fig. 22 is a liquefied $Co_2$ cylinder; 452 is a desorption tower for removal of water and oil; 453 is a filter as a dust trap; 454 is a pipe; 455 is a nozzle; and 456 is a pressure regulating valve. The $CO_2$ supply mechanism may be connected to the sample gas supply line 406.

A helium refrigerator (not shown) may typically be used in the freeze generator but other freezing media such as liquefied nitrogen may also be used.

In the apparatus shown in Fig. 22, compartment A preferably has an inner capacity of 0.5 - 5 cm$^3$.

Compartment A may have any shape as seen in plan view.

In Fig. 22, compartment A is shown to be positioned above compartment B. Inversely, compartment B may be positioned above compartment A. If desired, both compartments A and B may be juxtaposed on a horizontal plane.

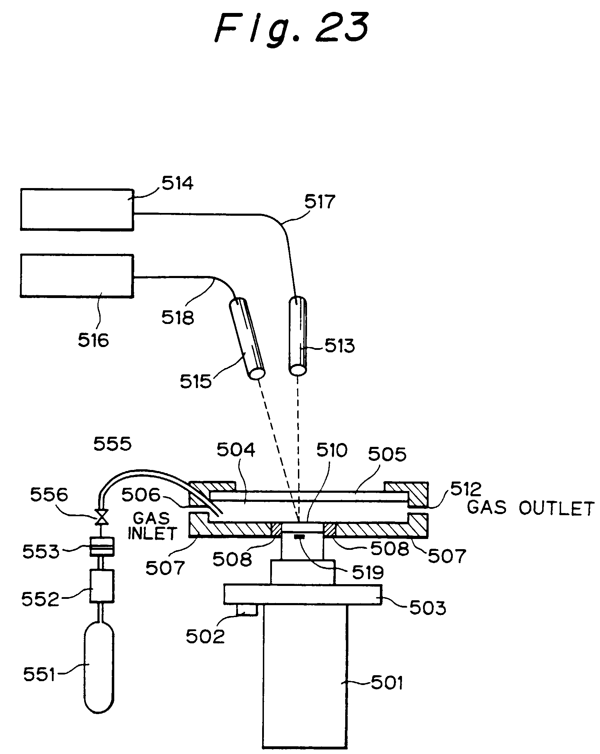

Still another embodiment of the present invention is shown in Fig. 23. Shown by 501 is a freeze generator; 502 is a heater; 503 is a cold head; 504 is a measuring compartment which consists of two parts 507 and 508, with 507 being made of a good heat conductor such a gold, silver, copper, aluminum, silicon, nickel or chromium, and 508 being made of a poor heat conductor such as stainless steel, a Cu-Ni alloy, glass, ceramics or plastics (e.g., a fluorine resin, a polyimide resin and a silicone resin); 505 is a window made of a light-transmissive material such as glass; 506 is an inlet for the sample gas to be measured; 510 is a reflector mirror; 512 is a gas outlet; 513 is a light condenser lens; 514 is a light source such as an LED; 515 is a condenser lens; 516 is a photodetector; and 517 and 518 are each an optical fiber.

A measurement of the water content of a gas with the apparatus shown in Fig. 23 will proceed as follows. First, the gas to be measured is supplied into the measuring compartment 504 through the inlet 506 without cooling it in any particular way, whereupon the gas contacts the reflector mirror 510 to form dew or frost on it; the uncondensed gas will be discharged from the system through the outlet 512; the light from the light source 514 is converged by the condenser lens 513 in such a way as to form a beam spot that is focused at the dew or frost layer formed on the reflector mirror 510, and the dew point or frost point is determined by the method already described hereinabove.

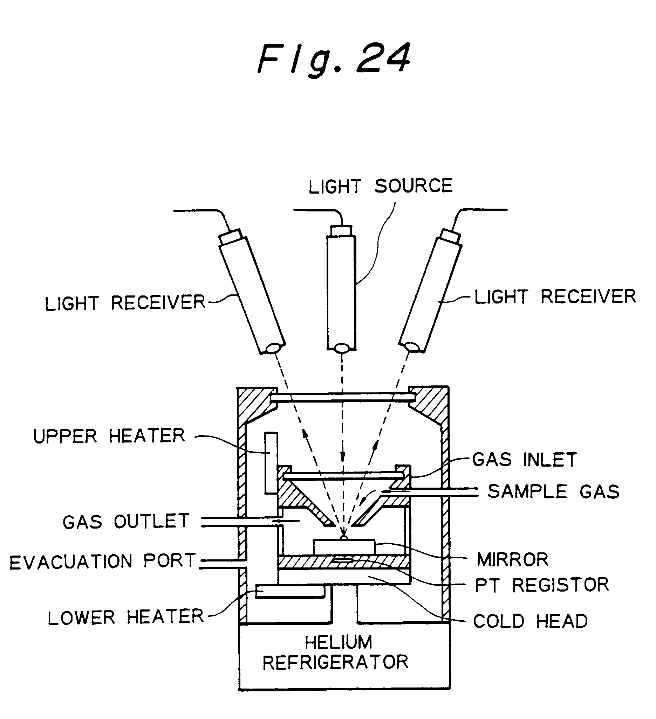

Fig. 24 shows an apparatus according to yet another embodiment of the present invention, which differs from the embodiment shown in Fig. 22 in that hole 409 is nozzle-shaped and that a higher sensitivity is attained since the scattered light is collected by the detector through condenser lenses provided in two directions.

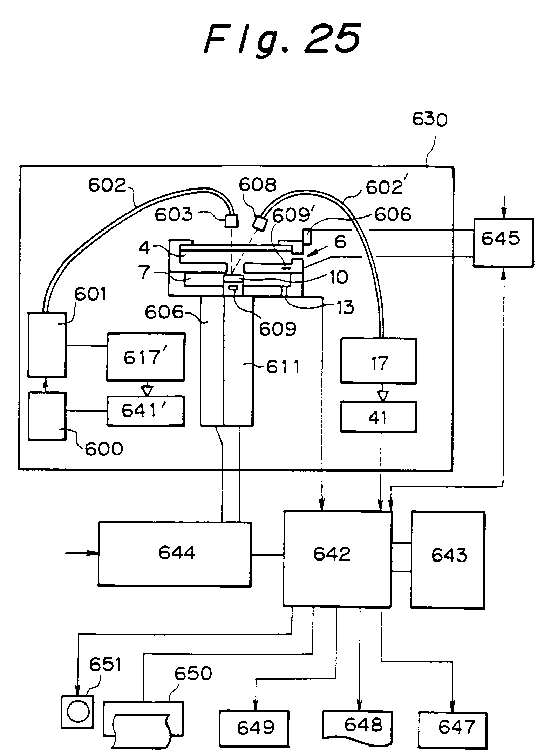

Fig. 25 shows another embodiment of the present inveniton. In this apparatus, the measurement of the dew point or frost point is processed with a computer. The surface of a reflector mirror 10 is cooled with a helium refrigerator 611. In this apparatus, the light from a light-emitting diode 601 travels through an optical fiber 602 to be transmitted to a condenser lens 603, where it is condensed and launched therefrom towards the reflector mirror 10 so that it is focused on its surface. The light is mostly reflected by the mirror 10 but a very small portion of it is scattered and travels through a condenser lens 608 and an optical fiber 602' to be sensed by a photodetector 617.

A sample gas is supplied through a gas inlet 6 into compartment A whose temperature is controlled by a heater 606', a temperature sensor 609' on compartment A and a temperature controller 645. The supplied gas contacts the surface of the reflector mirror 10 and the water present in a very small amount in the gas will be condensed on the mirror surface, whereby the intensity of scattered light from the mirror surface is increased. The uncondensed gas will be released through an outlet 12. The intensified scattered light is collected by the condenser lens 608 and guided through the optical fiber 602' to be sensed by the photodetector 617. The output level of the detector 617 is extremely low, especially in the case where the dew point of the gas to be measured is comparatively low; hence, the output from the photodetector is amplified by an amplifier 641. The output of the amplifier is supplied to a CPU 643 through an interface 642. If the light from the light-emitting diode 601 is noisy, the noise is also amplified by the amplifier 641, producing a signal error. Hence, in order to eliminate the noise, a feedback circuit is provided that is composed of a photodetector 617', an amplifier 641' and a noise eliminator 600. Stated more specifically, part of the light energy from the light-emitting diode 601 is fed to the photodetector 617' which is equivalent to the photodetector 617. The output of the photodetector 617' is further fed for amplification to the amplifier 641' which is equivalent to the amplifier 641 and the amplified output is supplied to the noise eliminator 600. The noise eliminator 600 feeds back a noise-associated output to the light-emitting diode 601, thereby eliminating the noise from its output signal. As a result, only the output due to light scattering can be picked up correctly, thereby lowering the detection limit for dew point. The temperature at the surface of the reflector mirror 10 is detected with the temperature senser 609 and supplied to CPU 643 through the interface 642. The CPU 643 performs calculation on the signal from the temperature sensor 609 indicating the temperature of the mirror surface and on the output from the photodetecotr 617 and supplies a digital indicator 647, a printer 648, an analog display 650 and a display 649 with output signals that are appropriate for the respective display means. A controller 644 controls the respective elements of the measuring apparatus in various ways. If, for example, the measurement of dew point ends, an electric current for heating with a heater 606 is increased in response to a signal from the controller 644, whereby the dew or frost on the reflector mirror 10 is gradually vaporized at a prescribed heating rate. Conversely, the current to be applied to the heater 606 is reduced so that solidification of water to form dew or frost layers in superposition on the reflector mirror 10 will proceed gradually. If desired, the controller 644 may send a signal to an alarm device 651 which then issues an audible alarm, etc. when the measurement of dew point ends.

Preferably, the surface of the reflector mirror may be composed of a silicon wafer. Silicon wafers as reflector mirrors are excellent in terms of surface smoothness but they have high light absorbance. In order to solve this problem, aluminum is evaporated or sputtered on silicon wafers. However, a reflector mirror in the form of a silicon wafer having an aluminum coat suffers from the problem that its reflectance may drop within a short time. This is because hard and fine alumina or silica particles that are contained in the gas blown through the hole or nozzle, the particles of oxides of Fe, Ni, Cr, Cu, etc. that come out of pipes, and the fine crystals of ice will attach soft metals such as aluminum, thereby making it difficult for the silicon wafer to maintain desired smoothness.

This problem can be solved by covering the thin aluminum coat with a clear and hard aluminum nitride film. In this case, the SN ratio of the apparatus becomes somewhat lower than when only thin Al coat is used (at 633 nm which is the operating wavelength of an LED, the SN ratio was ca. 98%, and at 780 nm which is the operating wavelength of a semiconductor laser, the SN ratio was ca. 93%, with the value for the case of using only the Al coat being taken as 100%); however, the present inventors confirmed that the SN ratio achievable was satisfactorily high and that the reflector mirror could withstand a continued use for at least 10,000 h. A thin AIN film can be formed on the thin Al coat by the following procedure; a silicon wafer that has been fully polished on a (611) or (600) face which is the cleavage face of a silicon crystal is placed in vacuum and aluminum is evaporated on the wafer's surface; or aluminum is sputtered in argon under vacuum; aluminum is further sputtered on the thus formed thin Al film in $N_2$. The thus formed surface of the reflect mirror performed as an ideal protective film for the mirror surface since the thin AlN film was very high and had a high degree of clarity. For an effective measurement, in terms of frost point, of the content of water that is present in a very small amount in a gas having a dew point of -80°C and below, it is absolutely necessary that condensed light be launched onto the mirror surface at the area against which the sample gas is being blown.

If the sample gas is allowed to contact an extremely cold surface before contact with the reflector mirror, the moisture in the gas will be adsorbed or experience a phase change, thereby causing an incorrect dew point or frost point on the lower side to be erroneously measured. This problem is free from the presention, which permits the temperature of the sample gas to be controlled freely so that the moisture content of the gas can be measured correctly.

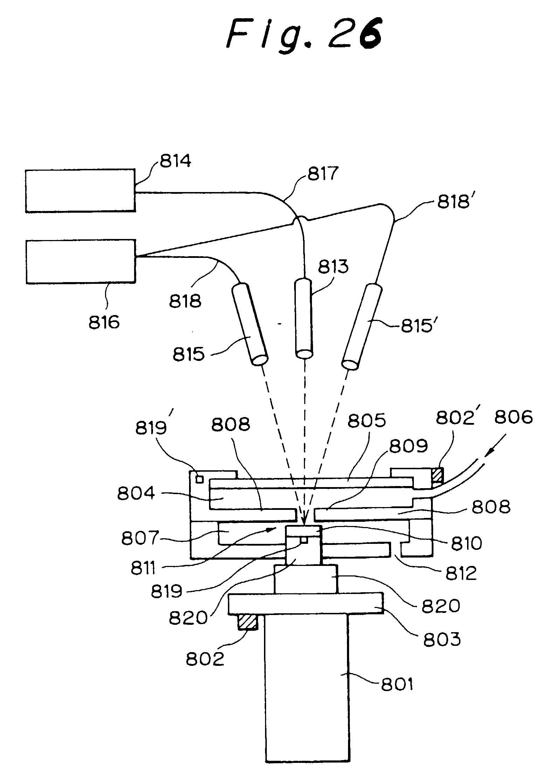

Another embodiment of the present invention is shown in Fig. 26. Shown by 801 is a freeze generator; 802 and 802' are each a heater; 803 is a cold head; 804 is compartment A which is made of a good heat conductor such as gold, silver, copper, aluminum, silicon, nickel or chromium; 805 is a window made of a light-transmissive material such as glass; 806 is an inlet for supplying a sample gas to be measured; 807 is compartment B, with a hole 809 being formed in the wall 808 at the interface between compartment A 804 and compartment B 807; 810 is a reflector mirror positioned on a heat conductor 820 to cover the hole 809; the heat conductor 820 is a metal having the highest possible heat conductivity such as Au, Ag, Cu, Al, Si, Ni or Cr; and 811 is the gap between the reflector mirror 810 and the interfacial wall 808. The gap 811 is preferably as small as possible but if it is designed to be extremely small, the slightest manufacturing error can potentially cause the reflector mirror 810 to contact the interfacial wall 808. To avoid this possibility, the gap 811 preferably has a size of 0.1 - 2.0 mm. At least part of compartment B is made of stainless steel, a Cu-Ni alloy, glass, ceramics or plastics (e.g., a fluorine resin, a polyimide resin and a silicone resin). This is in order to insure that compartment A will not be chilled by the cold head 803. Shown by 812 in Fig. 26 is a gas outlet; 814 is a light source; 813 is a condenser lens; the light source 814 may be an LED emitting at a given wavelength; 815 and 815' are each a condenser lens; 816 is a photodetector; and 817, 818 and 818' are each an optical fiber.

A measurement of the water content of a gas with the apparatus shown in Fig. 26 will proceed as follows. First, the gas to be measured is supplied through the inlet 806 into compartment A 804 which is controlled at a given temperature by means of heater 802'; the gas flows through the hole 809 to make contact with the reflector mirror 810, and the water present in a very small amount in the gas will form dew or frost on the reflector mirror 810. The uncondensed gas passes through the gap 811 to be discharged from compartment B through the outlet 812; the gap 811 is small enough to insure that the gas flowing from compartment A to compartment B through the hole 809 will not fail to contact the reflector mirror 810; the light from the light source 814 is converged by the condenser lens 813 in such a way as to form a beam spot that is focused at the dew or frost layer formed on the reflector mirror 810, and the dew point or frost point is evaluated by measuring the change in the intensity of scattered light due to dew or frost with the condenser lenses 815 and 815' and the detector 816. The temperature corresponding to that point is measured with the temperature sensor 819. The temperature of the reflector mirror is controlled by means of the temperature sensor 819 and the heater 802, whereas the temperature in compartment A is controlled by means of the temperature sensor 819' and the heater 802'.

In the present invention, at least two units of the light-receiving device are employed but the number of PN photodiodes to be used may be one. In this case, each light-receiving unit is connected TO the PN photodiode by an optical fiber. The light-receiving units are preferably mounted at angles of 30 - 90 degrees with respect to the optical axis of the projecting light.

The apparatuses shown in Figs. 15 - 20 are preferable. The apparatus shown in Fig. 19 does not have two or more condenser lenses. The apparatus, which is shown in Fig. 19, equipped with two or more condenser lenses is most preferable.

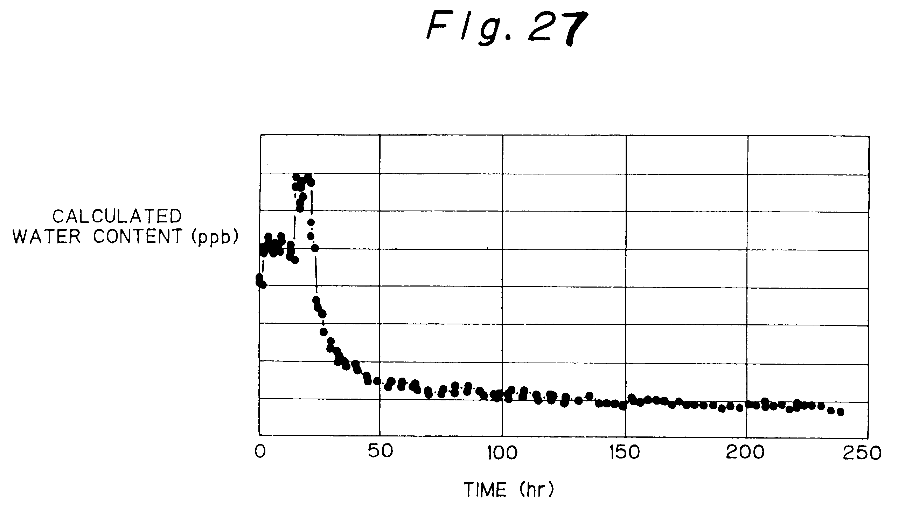

The standard gas capable of creating a desired water content for use in the experiment on determining the water content by measurements of the points of equilibria was generated by diluting a 10-ppm standard gas with the apparatus shown in Fig. 18, which is commercially available from Hitachi Tokyo Electronics Co., Ltd. Symbol "MFC" used in Fig. 27 stands for a "mass flow controller".

Fig. 27 is a graph showing the result of an experiment in which the water content of a gas was measured by allowing it to flow through a dew point meter for a prolonged time after it had been passed through a SAES Getter Purifier (SAES Getters S.p.A.) using a zirconium alloy capable of removing impurities at an elevated temperature of 400° C. In the initial period, the gas was not passed through the water removig device. After passage through the Getter Purifier, the water content of the gas dropped to 1 ppb and leveled off near at this value for more than 200 h. This shows that the method of the present invention enables the dew point or frost point to be measured in a consistent way to yield stable values over an extended period of time.

Preferable Embodiment

Example 1

The case where the temperature of compartment or cell A was adjusted at 20 °C (the invention) and the case where the cell temperature was adjusted at -100°C were compared with respect to the dew point where nucleus formation occurred. The results are shown below. The results of experiments conducted at cell temperatures of 0°C and 30°C were almost the same as the result for 20°C. It was therefore clear that cooling cell A to a low temperatrure as low as -100°C could cause supercooling on account of the adsorption of water in cell A.

| Sample | 1 | 2 | 3 | 4 |
|---|---|---|---|---|
| Prior art | -107.4°C | -108.3°C | -119.8°C | not detected |
| Invention | - 98.6°C | - 99.7°C | -111.2°C | -119.7°C |
| Difference | 8.8°C | 8.6°C | 8.6°C | |

Example 2

The case where the temperature of cell A was adjusted at 20°C and the case where the cell temperature was adjusted at -50°C were compared with respect to the frost point. The results were -112.5°C and -110.5°C in the respective cases, with the value in the case of -50°C being higher by 2°C. It was therefore clear that preliminary cooling cell a to ca. -50°C resulted in the highest dew point (nucleus forming frost point).

Example 3

Measurement of the subliming point were conducted with the temperature of cell A adjusted at 20°C, -10°C or -50 °C and the results were -105.0 °C, 104.3 °C and -104.7 °C, respectively. It was therefore clear that the subliming point or the point of solidification of the topmost layer was little dependent on the temperature of cell A.

The apparatus of the present invention is characterized by providing at least two units of the light-receiving device and as long as this condition is met, the actual system may be other than the three embodiments described above.

Using at least two units of the light-receiving device in accordance with the present invention helps attain the following advantages;

(a) Sensitivity is increased by a factor proportional to the number of detectors used;
(b) Detection is possible even if the position of frost condensation varies slightly; and
(c) In the absence of the need to perform precise adjustments of the optical axis, the apparatus is simple to use.

**Claims**

1. A method of determining the frost point of a gas containing a very small amount of water, comprising the steps of:

contacting a mirror (10a) with the gas;
irradiating the mirror with focused rays of light;
reducing the temperature of the mirror thereby condensing frost on the mirror;
detecting light reflected and/or scattered by the mirror and any frost thereon;
measuring the temperature of the mirror; and
determining the frost point from the temperature of the mirror when the detected light has a predetermined characteristic;

characterised by:

in the temperature-reducing step, reducing the temperature of the mirror gradually;
subsequent to the temperature-reducing step, gradually increasing the temperature of the mirror to a point in the neighbourhood of the frost point but which is insufficient for the frost to sublime completely from the mirror; and determining a point when the detected scattered light has a maximum intensity, and/or the detected reflected light has a minimum intensity, during the temperature-increasing step, to obtain the frost point (Ts, Ts') of the gas.

2. A method as claimed in claim 1, further comprising the steps of:

performing a second temperature-reducing step subsequent to the temperature-increasing step; and determining a second point when the detected scattered light has a minimum intensity, and/or the detected reflected light has a maximum intensity, during the second temperature-reducing step, to obtain the frost point (Ts, Ts') of the gas.

3. A method of determining the frost point of a gas containing a very small amount of water, comprising the steps of:

contacting a mirror (10a) with the gas;
irradiating the mirror with focused rays of light;
reducing the temperature of the mirror thereby condensing frost on the mirror;
detecting light reflected and/or scattered by the mirror and any frost thereon;
measuring the temperature of the mirror; and
determining the frost point from the temperature of the mirror when the detected light has a predetermined characteristic;

characterised by:

in the temperature-reducing step, reducing the temperature of the mirror gradually;
subsequent to the temperature-reducing step, gradually increasing the temperature of the mirror to a point in the neighbourhood of the frost point but which is insufficient for the frost to sublime completely from the mirror;
performing a second temperature-reducing step subsequent to the temperature-increasing step; and determining a point when the detected scattered light has a minimum intensity, and/or the detected reflected light has a maximum intensity, during the second temperature-reducing step, to obtain the frost point (Ts, Ts') of the gas.

4. A method according to any preceding claim, wherein the temperature-reducing and/or increasing steps are performed at a rate which is varied either stepwise or continuously generally along a curve represented by:

$$R(T) = R(T_0) \left[ P'(T)/P'(T_0) \right]^n$$

where:

T        is the temperature (K) of the mirror;
$T_0$        is a specific selected temperature (K) between room temperature and the temperature of liquid nitrogen;
R(T)        is the cooling and/or heating rate (K/min) at a selected temperature (K) of the reflector mirror;
P'(T)        is the derived function of the saturated vapour pressure of ice determined with the temperature (T) being taken as a variable;
$P'(T_0)$        is a calculated value of the saturated vapour pressure of water at the specific temperature $T_0$; and
n        is the value so selected as to provide a substantially constant signal-to-noise ratio of at least 2 in the measurement of the change in reflected light and/or scattered light over a fixed temperature interval $\Delta T$.

5. A method according to claim 4, wherein the cooling and heating rates are determined by applying the following equations for vapour pressure to P'(T) and $P'(T_0)$:

$$\log_{10} P_{H2O} = -2445.5646/T + 8.2312 \log_{10} T -$$

$$0.016770067T + 1.20514 \times 10^{-5} T^2 - 6.757169$$

where:

T        is the dew point on the absolute scale (K); and
$P_{H2O}$        is the saturated vapour pressure of water (mmHg).

6. A method according to any preceding claim, wherein, in the point determining step(s), the maximum or minimum value for the scattered light and/or reflected light is determined by a technique in which the intensity of received light is regarded as being on a quadratic curve with the variable being either the temperature of the reflector mirror or the water content calculated by conversion therefrom, said quadratic curve being differentiated and a straight line being obtained by the least-squares method.

7. A method according to any preceding claim, further comprising the step of cleaning the mirror by evaporating all of the ice or frost present thereon.

8. A method according to any of Claims 1 to 6, further comprising the step of cleaning the mirror, either manually or automatically, using $CO_2$ or a $CO_2$ containing gaseous mixture.

9. An optical frost-point meter for determining the frost point of a gas containing a very small amount of water, comprising:

a mirror (10a);
means (5a, A, B, 6a) for bringing the mirror into contact with the gas;
means (4a) for irradiating the mirror with focused rays of light;
means (1a, 8a) for varying the temperature of the mirror so that frost can be condensed on the mirror;
means (2a, 4a') for detecting light reflected and/or scattered by the mirror and any frost thereon;
means (19a) for measuring the temperature of the mirror; and
means for determining the frost point from the temperature of the mirror when the detected light has a predetermined characteristic;

characterised in that:

control means is provided which is operable to control the temperature-varying means to:

reduce the temperature of the mirror gradually; and
increase the temperature of the mirror gradually subsequent to the temperature-reduction, to a point in the neighbourhood of the frost point but which is insufficient for the frost to sublime completely from the mirror; and

the frost-point determining means is operable to:

determine a point when the detected scattered light has a maximum intensity, and/or the detected reflected light has a minimum intensity, during the temperature-, increase, to thereby obtain the frost point (Ts, Ts') of the gas.

10. An optical frost-point meter for determining the frost point of a gas containing a very small amount of water, comprising:

a mirror (10a);
means (5a, A, B, 6a) for bringing the mirror into contact with the gas;
means (4a) for irradiating the mirror with focused rays of light;
means (1a, 8a) for varying the temperature of the mirror so that frost can be condensed on the mirror;
means (2a, 4a') for detecting light reflected and/or scattered by the mirror and any frost thereon;
means (19a) for measuring the temperature of the mirror; and
means for determining the frost point from the temperature of the mirror when the detected light has a predetermined characteristic;

characterised by:

control means operable to control the temperature-varying means to:

reduce the temperature of the mirror gradually;
increase the temperature of the mirror gradually subsequent to the temperature-reduction, to a point in the neighbourhood of the frost point but which is insufficient for the frost to sublime completely from the mirror; and
reduce the temperature of the mirror subsequent to the temperature increase; and

the frost-point determining means is operable to:

determine a point when the detected scattered light has a minimum intensity, and/or the detected reflected light has a maximum intensity, during the subsequent temperature-reduction, to thereby obtain determine the frost point (Ts, Ts') of the gas.

11. An optical frost-point meter according to Claim 9 or 10, wherein:

said means for bringing the mirror into contact with the gas includes:
a first compartment (A) made of a good heat conductor;
an inlet (5a) into the first compartment for the gas to be measured;
a second compartment (B) provided adjacent the first compartment, at least part of the second compartment being made of a poor heat conductor; and
a gas outlet (6a) from the second compartment; a hole or nozzle (9a) being provided at an interface between the compartments;
said means for measuring the temperature of the mirror comprises a temperature sensor (19a) for the second compartment;

the mirror being provided in the second compartment in alignment with and spaced by a small gap (11a) from the hole or nozzle and being thermally connected to a heat sink (1a) in such a way that it can be freely varied in temperature from room temperature to -80°C or below;
said meter further comprising a temperature sensor (19a') for the first compartment.


## Patentansprüche

1. Verfahren zur Bestimmung des Gefrierpunkts eines Gases, welches eine sehr kleine Menge an Wasser enthält, mit folgenden Schritten:

in-Berührung-bringen des Gases mit einem Spiegel (10a);

Bestrahlung des Spiegels mit fokussierten Lichtstrahlen;

Verringerung der Temperatur des Spiegels, so daß Rauhreif auf dem Spiegel kondensiert;

Erfassung von Licht, welches durch den Spiegel und jeglichen Rauhreif auf diesem reflektiert und/oder gestreut wird;

Messung der Temperatur des Spiegels; und

Bestimmung des Gefrierpunkts aus der Temperatur des Spiegels, bei welcher das nachgewiesene Licht eine vorbestimmte Eigenschaft aufweist;

gekennzeichnet durch:

in dem Temperaturverringerungsschritt wird die Temperatur des Spiegels allmählich verringert;

nach dem Temperaturverringerungsschritt wird die Temperatur des Spiegels allmählich auf einen Punkt in der Nähe des Gefrierpunkts erhöht, der jedoch nicht dazu ausreicht, daß der Rauhreif vollständig vom Spiegel sublimiert; und

Bestimmung eines Punktes, an welchem das nachgewiesene, gestreute Licht eine maximale Intensität aufweist, und/oder das nachgewiesene, reflektierte Licht eine minimale Intensität aufweist, während des Temperaturerhöhungsschrittes, um den Gefrierpunkt (Ts, Ts') des Gases zu erhalten.

2. Verfahren nach Anspruch 1, mit folgenden weiteren Schritten:

   Durchführung eines zweiten Temperaturverringerungsschrittes nach dem Temperaturerhöhungsschritt; und

   Bestimmung eines zweiten Punktes, an welchem das nachgewiesene, gestreute Licht eine minimale Intensität aufweist, und/oder das nachgewiesene, reflektierte Licht eine maximale Intensität aufweist, während des zweiten Temperaturverringerungsschrittes, um den Gefrierpunkt (Ts, Ts') des Gases zu erhalten.

3. Verfahren zur Bestimmung des Gefrierpunktes eines Gases, welches eine sehr kleine Menge an Wasser enthält, mit folgenden Schritten:

   In-Berührung-bringen des Gases mit einem Spiegel (10a);

   Bestrahlung des Spiegels mit fokussierten Lichtstrahlen;

   Verringerung der Temperatur des Spiegels, wodurch Rauhreif auf dem Spiegel kondensiert;

   Nachweis von Licht, welches durch den Spiegel und jeglichen Rauhreif auf diesem reflektiert und/oder gestreut wird;

   Messung der Temperatur des Spiegels; und

   Bestimmung des Gefrierpunktes aus jener Temperatur des Spiegels, bei welcher das nachgewiesene Licht eine vorbestimmte Eigenschaft aufweist;

   gekennzeichnet durch:

   in dem Temperaturverringerungsschritt wird die Temperatur des Spiegels allmählich verringert;

   nach dem Temperaturverringerungsschritt wird die Temperatur des Spiegels allmählich bis zu einem Punkt in der Nähe des Gefrierpunkts erhöht, der jedoch nicht dazu ausreicht, daß der Rauhreif vollständig vom Spiegel sublimiert;

   Durchführung eines zweiten Temperaturverringerungsschrittes nach dem Temperaturerhöhungsschritt; und

   Bestimmung eines Punktes, an welchem das nachgewiesene, gestreute Licht eine minimale Intensität aufweist und/oder das nachgewiesene reflektierte Licht eine maximale Intensität aufweist, während des zweiten Temperaturverringerungsschrittes, um den Gefrierpunkt (Ts, Ts') des Gases zu erhalten.

4. Verfahren nach einem der voranstehenden Ansprüche, bei welchem die Temperaturverringerungs- und/oder Erhöhungsschritte mit einer Rate durchgeführt werden, die entweder schrittweise oder stetig im wesentlichen entlang einer Kurve variiert wird, die gegeben ist durch:

$$R(T) = R(T_0) \left[ P'(T)/P'(T_0) \right]^n$$

   wobei

   | | |
   |---|---|
   | $T$ | die Temperatur (K) des Spiegels ist; |
   | $T_0$ | eine bestimmte ausgewählte Temperatur (K) zwischen Zimmertemperatur und der Temperatur flüssigen Stickstoffs ist; |
   | $R(T)$ | die Kühl- und/oder Heizrate (K/min) bei einer ausgewählten Temperatur (K) des reflektierenden Spiegels ist; |
   | $P'(T)$ | die abgeleitete Funktion des Sättigungsdampfdrucks von Eis ist, bestimmt mit der Temperatur (T) als Variabler; |
   | $P'(T_0)$ | ein berechneter Wert für den Sättigungsdampfdruck von Wasser bei der bestimmten Temperatur $T_0$ ist; und |
   | $n$ | ein Wert ist, der so gewählt ist, daß ein im wesentlichen konstantes Signal-Rauschverhältnis von zu- |

mindest zwei bei der Messung der Änderung des reflektierten Lichts und/oder gestreuten Lichts über ein festes Temperaturintervall ΔT erzielt wird.

5. Verfahren nach Anspruch 4, bei welchem die Kühl- und Heizraten dadurch bestimmt werden, daß die folgenden Gleichungen für den Dampfdruck bei P'(T) und P'(T0) eingesetzt werden:

$$\log_{10}P_{H_2O} = -2445,5646/T+8,2312 \log_{10}T-$$

$$0,016770067T+1,20514 \times 10^{-5}T^2-6,757169$$

wobei:

T       der Taupunkt auf der absoluten Skala (K) ist; und

$P_{H_2O}$   der Sättigungsdampfdruck von Wasser (mmHg) ist.

6. Verfahren nach einem der voranstehenden Ansprüche, bei welchem in dem Schritt bzw. den Schritten zur Bestimmung des Punktes, der Maximal- oder Minimalwert für das gestreute Licht und/oder reflektierte Licht durch eine Vorgehensweise bestimmt wird, bei welcher die Intensität des empfangenen Lichts als auf einer quadratischen Kurve liegend angesehen wird, wobei die Variable entweder die Temperatur des reflektierenden Spiegels oder der Wassergehalt ist, der durch Umwandlung hieraus berechnet wird, wobei die quadratische Kurve differenziert wird, und eine gerade Linie durch das Verfahren der Minimierung der Fehlerquadrate erhalten wird.

7. Verfahren nach einem der voranstehenden Ansprüche, bei welchem weiterhin der Schritt der Reinigung des Spiegels durch Verdampfung des gesamten Eises oder Rauhreifes vorgesehen ist, die auf dem Spiegel vorhanden sind.

8. Verfahren nach einem der Ansprüche 1 bis 6, mit dem weiteren Schritt der Reinigung des Spiegels, entweder von Hand oder automatisch, unter Verwendung von $CO_2$ oder einer $CO_2$-haltigen Gasmischung.

9. Optisches Gefrierpunktmeßgerät zur Bestimmung des Gefrierpunktes eines Gases, welches eine sehr kleine Menge an Wasser enthält, wobei vorgesehen sind:

ein Spiegel (10a);

eine Vorrichtung (5a, A, B, 6a), um den Spiegel in Berührung mit dem Gas zu bringen;

eine Vorrichtung (4a) zum Bestrahlen des Spiegels mit fokussierten Lichtstrahlen;

eine Vorrichtung (1a, 8a) zur Änderung der Temperatur des Spiegels auf solche Weise, daß Rauhreif auf dem Spiegel kondensieren kann;

eine Vorrichtung (2a, 4a') zum Nachweis von Licht, welches durch den Spiegel und jeglichen Rauhreif auf diesem reflektiert und/oder gestreut wird;

eine Vorrichtung (19a) zur Messung der Temperatur des Spiegels); und

eine Vorrichtung zur Bestimmung des Gefrierpunkts aus jener Temperatur des Spiegels, bei welcher das nachgewiesene Licht eine vorbestimmte Eigenschaft aufweist;

dadurch gekennzeichnet, daß:

eine Regelvorrichtung vorgesehen ist, die so betreibbar ist, daß die Temperaturänderungsvorrichtung folgendermaßen geregelt wird:

daß die Temperatur des Spiegels allmählich verringert wird; und

die Temperatur des Spiegels nach der Temperaturverringerung allmählich erhöht wird, bis zu einem Punkt in der Nähe des Gefrierpunkts, der jedoch nicht dazu ausreicht, daß der Rauhreif vollständig von dem Spiegel sublimiert wird; und

die Gefrierpunktbestimmungsvorrichtung so betreibbar ist, daß:

ein Punkt bestimmt wird, an welchem das nachgewiesene, gestreute Licht eine maximale Intensität aufweist und/oder das nachgewiesene, reflektierte Licht eine minimale Intensität aufweist, während der Temperaturerhöhung, um hierdurch den Gefrierpunkt (Ts, Ts') des Gases zu erhalten.

10. Optisches Gefrierpunktmeßgerät zur Bestimmung des Gefrierpunktes eines Gases, welches eine sehr kleine Menge an Wasser enthält, wobei vorgesehen sind:

ein Spiegel (10a);

eine Vorrichtung (5a, A, B, 6a), um den Spiegel in Berührung mit dem Gas zu bringen;

eine Vorrichtung (4a) zur Bestrahlung des Spiegels mit fokussierten Lichtstrahlen;

eine Vorrichtung (1a, 8a) zur Änderung der Temperatur des Spiegels auf solche Weise, daß Rauhreif auf dem Spiegel kondensieren kann;

eine Vorrichtung (2a, 4a') zum Nachweis von Licht, welches durch den Spiegel und jeglichen Rauhreif auf diesem reflektiert und/oder gestreut wird;

eine Vorrichtung (19a) zur Messung der Temperatur des Spiegels; und

eine Vorrichtung zur Bestimmung des Gefrierpunktes aus jener Temperatur des Spiegels, an welchem das nachgewiesene Licht eine vorbestimmte Eigenschaft aufweist;

gekennzeichnet durch:

eine Regelvorrichtung, die so betreibbar ist, daß sie die Temperaturänderungsvorrichtung folgendermaßen regelt;

daß die Temperatur des Spiegels allmählich verringert wird;

die Temperatur des Spiegels nach der Temperaturverringerung allmählich erhöht wird, bis zu einem Punkt in der Nähe des Gefrierpunktes, der jedoch nicht dazu ausreicht, daß der Rauhreif vollständig von dem Spiegel sublimiert; und

die Temperatur des Spiegels nach der Temperaturerhöhung verringert wird; und

die Gefrierpunktbestimmungsvorrichtung so betreibbar ist, daß:

ein Punkt bestimmt wird, an welchem das nachgewiesene gestreute Licht eine minimale Intensität aufweist, und/oder das nachgewiesene, reflektierte Licht eine maximale Intensität aufweist, während der nachfolgenden Temperaturverringerung, um hierdurch den Gefrierpunkt (Ts, Ts') des Gases zu erhalten.

11. Optisches Gefrierpunktmeßgerät gemäß Anspruch 9 oder 10, wobei:

die Vorrichtung, um den Spiegel in Berührung mit dem Gas zu bringen, aufweist:

ein erstes Abteil (A) aus einem guten Wärmeleiter;

einen Einlaß (5a) in das erste Abteil für das zu messende Gas;

ein zweites Abteil (B), welches neben dem ersten Abteil vorgesehen ist, wobei zumindest ein Teil des zweiten Abteils aus einem schlechten Wärmeleiter besteht; und

einen Gasauslaß (6a) aus dem zweiten Abteil; wobei ein Loch oder eine Düse (9a) an einer Grenzfläche zwischen den Abteilen vorgesehen ist;

und die Vorrichtung zur Messung der Temperatur des Spiegels einen Temperatursensor (19a) für das zweite Abteil umfaßt;

wobei der Spiegel in dem zweiten Abteil ausgerichtet zum Loch oder der Düse und von dort um einen kleinen Spalt (11a) beabstandet vorgesehen ist, und in Wärmeverbindung mit einer Wärmesenke (1a) auf solche Weise steht, daß seine Temperatur von Zimmertemperatur auf -80° C oder darunter frei wählbar geändert werden kann;

wobei das Meßgerät weiterhin einen Temperatursensor (19a') für das erste Abteil aufweist.

## Revendications

1. Procédé pour déterminer le point de gel d'un gaz contenant une très petite quantité d'eau, comprenant les étapes consistant à :

   mettre un miroir (10a) en contact avec le gaz ;
   illuminer le miroir avec des rayons de lumière focalisés;
   réduire la température du miroir en condensant ainsi le gel sur le miroir ;
   détecter la lumière réfléchie et/ou dispersée par le miroir et tout gel sur celui-ci ;
   mesurer la température du miroir ; et
   déterminer le point de gel à partir de la température du miroir lorsque la lumière détectée a une caractéristique prédéterminée ;

   caractérisé par :

   lors de l'étape de diminution de la température, diminuer la température du miroir progressivement ;
   à la suite de l'étape de diminution de la température, augmenter progressivement la température du miroir à un point au voisinage du point de gel mais qui est insuffisante pour que le gel soit sublimé complètement du miroir ; et déterminer un point où la lumière dispersée détectée a une intensité maximale, et/ou la lumière réfléchie détectée a une intensité minimale, pendant l'étape d'augmentation de la température, pour obtenir le point de gel (Ts, Ts') du gaz.

2. Procédé selon la revendication 1, comprenant en outre les étapes consistant à :

   exécuter une deuxième étape de diminution de la température à la suite de l'étape d'augmentation de la température ; et
   déterminer un deuxième point où la lumière dispersée détectée a une intensité minimale, et/ou où la lumière réfléchie détectée a une intensité maximale, pendant la deuxième étape de diminution de la température, pour obtenir le point de gel (Ts, Ts') du gaz.

3. Procédé pour déterminer le point de gel d'un gaz contenant une très petite quantité d'eau, comprenant les étapes consistant à :

   mettre un miroir (10a) en contact avec le gaz ;
   illuminer le miroir avec des rayons de lumière focalisés;
   réduire la température du miroir en condensant ainsi le gel sur le miroir ;
   détecter la lumière réfléchie et/ou dispersée par le miroir et tout gel sur celui-ci ;
   mesurer la température du miroir ; et
   déterminer le point de gel à partir de la température du miroir lorsque la lumière détectée a une caractéristique prédéterminée ;

   caractérisé par :

   à l'étape de diminution de la température, diminuer la température du miroir progressivement ;

à la suite de l'étape de diminution de la température, augmenter progressivement la température du miroir à un point au voisinage du point de gel mais qui est insuffisante pour que le gel soit sublimé complètement du miroir ;

exécuter une deuxième étape de diminution de la température à la suite de l'étape d'augmentation de la température ; et

déterminer un point où la lumière dispersée détectée a une intensité minimale, et/ou où la lumière réfléchie détectée a une intensité maximale, pendant la deuxième étape de diminution de la température, pour obtenir le point de gel (Ts, Ts') du gaz.

4. Procédé selon l'une des revendications précédentes, où les étapes de diminution et/ou d'augmentation de la température sont exécutées à une vitesse qui est modifiée soit pas-à-pas soit continuellement, généralement le long d'une courbe représentée par :

$$R(T) = R(T_0) \, [P' \, (T) \, /P' \, (T_o)]^n$$

où

T représente la température (K) du miroir ;

$T_o$ est une température spécifique sélectionnée (K) entre la température ambiante et la température de l'azote liquide ;

R(T) représente la vitesse de refroidissement et/ou d'échauffement (K/mn) à une température sélectionnée (K) du miroir de réflexion ;

P'(T) représente la fonction dérivée de la pression de vapeur saturée de la glace déterminée avec la température (T) prise comme variable ;

$P'(T_o)$ représente une valeur calculée de la pression de vapeur saturée de l'eau à la température spécifique $T_o$ ; et

n représente la valeur ainsi sélectionné pour réaliser un rapport signal à bruit sensiblement constant d'au moins 2 dans la mesure du changement dans la lumière réfléchie et/ou la lumière dispersée sur un intervalle de température fixe $\Delta T$.

5. Procédé selon la revendication 4, où les vitesses de refroidissement et d'échauffement sont déterminées en appliquant les équations suivantes pour la pression de la vapeur à P'(T) et $P'(T_o)$ :

$$\log_{10} P_{H20} = -2445{,}5646/T + 8{,}2312 \log_{10} T -$$

$$0{,}016770067T + 1{,}20514 \times 10^{-5} T^2 - 6{,}757169$$

où

T représente le point de rosée sur l'échelle absolue (K) ; et

$P_{H20}$ représente la pression de vapeur saturée de l'eau (mmHg).

6. Procédé selon l'une des revendications précédentes, où à ou aux étapes de détermination de point, la valeur maximale ou minimale pour la lumière dispersée et/ou la lumière réfléchie est déterminée par une technique où l'intensité de la lumière reçue est considérée comme étant une courbe quadratique, la variable étant soit la température du miroir de réflexion soit la teneur en eau calculée par conversion à partir de celle-ci, ladite courbe quadratique étant différenciée, et une ligne droite étant obtenue par la méthode des plus petits carrés.

7. Procédé selon l'une des revendications précédentes, comprenant en outre l'étape consistant à nettoyer le miroir en faisant évaporer toute la glace ou gel présent sur celui-ci.

8. Procédé selon l'une des revendications 1 à 6, comprenant en outre l'étape consistant à nettoyer le miroir, soit manuellement soit automatiquement, en utilisant du $CO_2$ ou un mélange gazeux contenant du $CO_2$.

9. Dispositif de mesure optique du point de gel pour déterminer le point de gel d'un gaz contenant une très petite quantité d'eau, comprenant :

un miroir (10a) ;
un moyen (5a, A, B, 6a) pour amener le miroir en contact avec le gaz ;
un moyen (4a) pour illuminer le miroir avec des rayons de lumière focalisés ;
un moyen (1a, 8a) pour faire varier la température du miroir de façon que le gel puisse être condensé sur le miroir ;
un moyen (2a, 4a') pour détecter la lumière réfléchie et/ou dispersée par le miroir et tout gel sur celui-ci ;
un moyen (19a) pour mesurer la température du miroir ; et
un moyen pour déterminer le point de gel à partir de la température du miroir lorsque la lumière détectée a une caractéristique prédéterminée ;

caractérisé en ce que :

un moyen de contrôle est prévu qui fonctionne pour contrôler le moyen faisant varier la température pour :

diminuer la température du miroir progressivement ; et
augmenter la température du miroir progressivement à la suite de la diminution de la température, à un point au voisinage du point de gel mais qui est insuffisante pour que le gel se sublime complètement du miroir ; et

le moyen de détermination du point de gel fonctionne pour:

déterminer un point où la lumière dispersée détectée a une intensité maximale, et/ou où la lumière réfléchie détectée a une intensité minimale, pendant l'augmentation de la température, pour obtenir ainsi le point de gel (Ts, Ts') du gaz.

10. Dispositif de mesure optique du point de gel pour déterminer le point de gel d'un gaz contenant une très petite quantité d'eau, comprenant :

un miroir (10a) ;
un moyen (5a, A, B, 6a) pour amener le miroir en contact avec le gaz ;
un moyen (4a) pour illuminer le miroir avec des rayons de lumière focalisés ;
un moyen (1a, 8a) pour faire varier la température du miroir de façon que le gel puisse être condensé sur le miroir ;
un moyen (2a, 4a') pour détecter la lumière réfléchie et/ou dispersée par le miroir et tout gel sur celui-ci ;
un moyen (19a) pour mesurer la température du miroir ; et
un moyen pour déterminer le point de gel à partir de la température du miroir lorsque la lumière détectée a une caractéristique prédéterminée ;

caractérisé par :

un moyen de contrôle fonctionnant pour commander au moyen faisant varier la température de :

diminuer la température du miroir progressivement ;
augmenter la température du miroir progressivement à la suite de la diminution de la température, à un point au voisinage du point de gel mais qui est insuffisante pour que le gel soit sublimé complètement du miroir ; et
diminuer la température du miroir à la suite de l'augmentation de la température ; et

le moyen déterminant le point de gel fonctionne pour :

déterminer un point où la lumière dispersée détectée a une intensité minimale et/ou où la lumière réfléchie détectée a une intensité maximale, pendant la diminution de température subséquente, pour déterminer ainsi le point de gel (Ts, Ts') du gaz.

11. Dispositif de mesure optique du point de gel selon la revendication 9 ou 10, où

ledit moyen pour amener le miroir en contact avec le gaz comporte :

un premier compartiment (A) réalisé en un bon conducteur de chaleur ;

une entrée (5a) dans le premier compartiment pour le gaz à mesurer ;

un deuxième compartiment (B) prévu pour être contigu au premier compartiment, au moins une partie du deuxième compartiment étant réalisée en un conducteur de chaleur médiocre ; et

une sortie de gaz (6a) du deuxième compartiment ; un trou ou buse (9a) étant prévu à une interface entre les compartiments ;

ledit moyen pour mesurer la température du miroir comprend un capteur de température (19a) pour le deuxième compartiment ;

le miroir étant prévu dans le deuxième compartiment en alignement avec et espacé selon un petit intervalle (11a) du trou ou buse et étant thermiquement relié à un puits de chaleur (1a) de manière que sa température puisse être modifiée librement de la température ambiante à -80°C ou en dessous ;

ledit dispositif de mesure comprenant en outre un capteur de température (19a') pour le premier compartiment.

# Fig.1

3a 4a 2a 4a' 19a' 8a'

A

5a INLET OF GAS TO BE
MEASURED

9a

B 11a

7a 19a 7a

10a

8a

20a 1a

6a

GAS OUTLET

Fig. 2

SUBLIMATION POINT

INTENSITY OF SCATTERED LIGHT

INTENSITY OF SCATTERED LIGHT

mV

ACCUMULATION POINT

POINT OF NUCLEUS FORMATION

N

Ts

TEMPERATURE OF REFLECTOR MIRROR

Tn

K

a

b

c

d

e

f

TEMPERATURE OF REFLECTOR MIRROR

TIME

EP 0 535 248 B1

Fig. 3

POINT OF
NUCLEUS FORMATION

INTENSITY OF
REFLECTED LIGHT

INTENSITY OF
REFLECTED LIGHT

mV

ACCUMULATION
POINT

SUBLIMATION
POINT

SUBLIMATION POINT

N'

d'

Ts'

c'      e'      f'

TEMPERATURE OF
REFLECTOR MIRROR
K

Tn

a'

TEMPERATURE OF
REFLECTOR MIRROR

b'

→ TIME

EP 0 535 248 B1

# Fig. 4

SUBLIMATION
POINT

S    i    A    Ts

ACCUMULATION
POINT

TEMPERATUR
OF
REFLECTOR
MIRROR

K

h

POINT OF
NUCLEUS
FORMATION

N    Tn

INTENSITY OF SCATTERED
LIGHT         mV

# Fig. 5

# Fig. 6

# Fig. 7

Fig. 8

CLEANUP OF EP STAINLESS STEEL TUBE

# Fig. 9

EP 0 535 248 B1

L   N₂

MFC

SAMPLE TUBE

DEW POINT METER

SCHEMATIC  LAYOUT  FOR  THE  SYSTEM  OF  TUBE
CLEANUP   SPEED   MEASUREMENT

# F I g. 10

CLEANUP OF 3/8" SUS316L EP
TUBE AND DRY O₂ PASSIVATED
EP TUBE

## Fig. 11

CLEANUP OF 1″ SUS316L EP TUBE AND
DRY O₂ PASSIVATED EP TUBE (OP)

EP 0 535 248 B1

# Fig. 12

Fig. 13

WATER CONTENT AS CALCULATED FROM MEASURED POINT OF EQUILIBRIUM (ppb)

WATER CONTENT OF STANDARD GAS

(ppb)

# *Fig. 14*

SCHEMATIC LAYOUT FOR GENERATION
AND DILUTION OF STANDARD GAS OF
LOW WATER CONTENT

# F i g. 15

# F i g. 16

# F i g. 17

# F i g. 18

# Fig. 19

# F I g. 20

# Fig. 21

# Fig. 22

CHAMBER (A) 404

CHAMBER (B) 407

GAS
INLET

412 GAS OUTLET

# F I g. 23

# Fig. 24

LIGHT SOURCE

LIGHT RECEIVER

LIGHT RECEIVER

UPPER HEATER

GAS INLET

SAMPLE GAS

GAS OUTLET

EVACUATION PORT

MIRROR

PT REGISTOR

LOWER HEATER

COLD HEAD

HELIUM REFRIGERATOR

# Fig. 25

# Fig. 26

# Fig. 27

CALCULATED WATER CONTENT (ppb)

TIME (hr)

EP 0 535 248 B1